(19) Europäisches Patentamt
European Patent Office
Office européen des brevets

(11) **EP 4 665 042 A1**

(12) **EUROPEAN PATENT APPLICATION**
published in accordance with Art. 153(4) EPC

(43) Date of publication:
**17.12.2025   Bulletin 2025/51**

(21) Application number: **24755956.0**

(22) Date of filing: **30.01.2024**

(51) International Patent Classification (IPC):
**H04W 72/0446** (2023.01)

(52) Cooperative Patent Classification (CPC):
**H04B 7/06; H04B 7/08; H04W 72/044;**
**H04W 72/0446; H04W 72/0453; H04W 72/25**

(86) International application number:
**PCT/CN2024/074574**

(87) International publication number:
**WO 2024/169582 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   **17.02.2023   CN 202310189219**

(71) Applicant: **Huawei Technologies Co., Ltd.**
**Shenzhen, Guangdong 518129 (CN)**

(72) Inventors:
• **YI, Feng**
**Shenzhen, Guangdong 518129 (CN)**
• **ZHANG, Yi**
**Shenzhen, Guangdong 518129 (CN)**
• **QI, Hong**
**Shenzhen, Guangdong 518129 (CN)**
• **SU, Hongjia**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND RELATED APPARATUS**

(57)    This application provides a communication method and a related apparatus, to avoid a sending conflict between a plurality of terminals and implement beam training. The method includes: A first terminal sends N sidelink synchronization signal blocks S-SSBs to a second terminal on N first time-frequency resources, where the N first time-frequency resources are located within a resource pool, and N is an integer greater than 1. The second terminal sends feedback information from the second terminal to the first terminal on one or more of M second time-frequency resources, where the feedback information indicates measurement results of one or more S-SSBs in the N S-SSBs, the N second time-frequency resources are located in the resource pool, M is an integer greater than 1, and M is less than or equal to N.

FIG. 18

EP 4 665 042 A1

## Description

This application claims priority to Chinese Patent Application No. 202310189219.X, filed with the China National Intellectual Property Administration on February 17, 2023 and entitled "COMMUNICATION METHOD AND RELATED APPARATUS", which is incorporated herein by reference in its entirety.

## TECHNICAL FIELD

This application relates to the communication field, and in particular, to a communication method and a related apparatus.

## BACKGROUND

In a sidelink communication system, to ensure communication quality, an optimal communication direction between two communication parties may be determined through beam training.

When beam training is performed by using a sidelink (sidelink, SL) synchronization signal block (synchronization signal block, S-SSB) in the sidelink communication system, because a time-frequency resource of the S-SSB is not in a resource pool, a plurality of terminals engaged in sidelink communication may send S-SSBs on a same time-frequency resource. When beam training is performed by using the S-SSBs, as each terminal needs to carry different beam information with use the S-SSB, simultaneous transmission of the S-SSBs from the plurality of terminals over the same time-frequency resource leads to conflicts due to differing contents being transmitted, thereby impacting the effectiveness of beam training.

## SUMMARY

This application provides a communication method and a related apparatus, to avoid a sending conflict between a plurality of terminals and impact on beam training.

According to a first aspect, a communication method is provided. The method may be applied to a first terminal. For example, the method may be performed by the first terminal, or may be performed by a component (for example, a chip or a chip system) configured in the first terminal, or may be implemented by a logical module or software that can implement all or some functions of the first terminal. This is not limited in this application.

For example, the method includes: sending N sidelink synchronization signal blocks S-SSBs on N first time-frequency resources, where the N first time-frequency resources are located within a resource pool, and N is an integer greater than 1; and receiving feedback information from a second terminal on one or more of N second time-frequency resources, where the feedback information indicates measurement results of one or more S-SSBs in the N S-SSBs, and the N second time-frequency resources are located in the resource pool.

It should be understood that a first time-frequency resource occupies one slot in time domain, and occupies at least one subchannel in frequency domain. A second time-frequency resource occupies two symbols in time domain, and occupies at least one physical resource block (physical resource block, PRB) in frequency domain.

It should be further understood that two S-SSBs in the N S-SSBs correspond to different transmit beams. Different beams may be understood as different directions for sending S-SSBs, different spatial domain parameters, different beamforming weights, different widths, and the like.

In this application, the N first time-frequency resources and the N second time-frequency resources are all located in the resource pool, and a terminal needs to determine, through resource contention, a time-frequency resource used for transmission for each of time-frequency resources in the resource pool. Therefore, the first terminal sends one S-SSB on each of the N first time-frequency resources, and receives, on the N second time-frequency resources, the feedback information corresponding to the at least one S-SSB, to avoid a sending conflict with another terminal. In addition, the first terminal may determine an S-SSB with high signal strength in the plurality of sent S-SSBs based on the received feedback information, to implement beam training on a sidelink.

With reference to the first aspect, in some implementations of the first aspect, feedback information corresponding to the $i^{th}$ S-SSB in the N S-SSBs is received on the $i^{th}$ second time-frequency resource in the N second time-frequency resources, the $i^{th}$ S-SSB is an S-SSB sent on the $i^{th}$ first time-frequency resource in the N first time-frequency resources, and a value of i is any integer from 1 to N. In other words, each first time-frequency resource corresponds to one second time-frequency resource, and different first time-frequency resources correspond to different second time-frequency resources. For example, the feedback information corresponding to the S-SSB sent on the $i^{th}$ first time-frequency resource is sent on the $i^{th}$ second time-frequency resource.

According to this one-to-one correspondence, the first terminal can send the $i^{th}$ S-SSB and receive the feedback information of the $i^{th}$ S-SSB by using beams in a same direction.

With reference to the first aspect, in some implementations of the first aspect, there is one second time-frequency resource between two adjacent first time-frequency resources in time domain.

Different second time-frequency resources are located in different slots, and the second time-frequency resource is a resource in a physical sidelink feedback channel (physical sidelink feedback channel, PSFCH) configured in the resource pool.

It should be understood that the first time-frequency resource and the second time-frequency resource are alternately distributed in time domain. If numbers of the time-frequency resources are determined based on a sequence in time domain, locations of the first time-frequency resources and the second time-frequency resources in time domain are as follows: the 1st first time-frequency resource, the 1st second time-frequency resource, the 2nd first time-frequency resource, the 2nd second time-frequency resource, ..., the Nth first time-frequency resource, and the Nth second time-frequency resource.

With reference to the first aspect, in some implementations of the first aspect, the ith second time-frequency resource is located after the ith first time-frequency resource in time domain, there is no first time-frequency resource between the ith first time-frequency resource and the ith second time-frequency resource.

With reference to the first aspect, in some implementations of the first aspect, each second time-frequency resource includes X1 resource elements, the X1 resource elements correspond to X2 thresholds, X1 is an integer greater than or equal to X2, and X2 is an integer greater than or equal to 1.

It should be understood that a resource element is related to a frequency domain resource and a code domain resource of the second time-frequency resource. The frequency domain resource is a quantity of PRBs allocated to the first time-frequency resource that occupies one subchannel and one slot, and the code domain resource is a configured cyclic shift sequence pair. For example, if the second time-frequency resource includes A PRBs, and the quantity of configured cyclic shift pairs is B, the quantity X1 of resource elements included in the second time-frequency resource satisfies: X1=A*B*2.

With reference to the first aspect, in some implementations of the first aspect, an index index of a resource element corresponding to the $x^{th}$ threshold in the X2 thresholds satisfies:

$$\text{index} = (S_{ID} + D_{ID} + x + delta) \bmod X1,$$

where
*delta* is a preconfigured or predefined integer, $S_{ID}$ is an identifier of the first terminal, and $D_{ID}$ is an identifier of the second terminal.

With reference to the first aspect, in some implementations of the first aspect, the N second time-frequency resources are located after the N first time-frequency resources in time domain.

It should be understood that, that the N second time-frequency resources are located after the N first time-frequency resources in time domain means that the 1st second time-frequency resource is located after the Nth first time-frequency resource.

Optionally, at least two of the N second time-frequency resources are located in a same slot. This is because a second resource occupies only two symbols in time domain. Therefore, a method for placing a plurality of second time-frequency resources in one slot can reduce a waste of resources.

With reference to the first aspect, in some implementations of the first aspect, received strength of an S-SSB indicated by feedback information received on the one or more second time-frequency resources is greater than received strength of a remaining S-SSB other than the S-SSB indicated by the feedback information in the N S-SSBs.

With reference to the first aspect, in some implementations of the first aspect, the method further includes: sending or receiving direct communication requests (direct communication request, DCR) on N third time domain resources, where the N third time domain resources are in one-to-one correspondence with the N first time-frequency resources, or the N third time domain resources are in one-to-one correspondence with the N second time-frequency resources.

With reference to the first aspect, in some implementations of the first aspect, the ith first time-frequency resource and the ith third time domain resource are separated by first duration, or the ith second time-frequency resource and the ith third time domain resource are separated by second duration. The first duration and the second duration are preconfigured, predefined, or configured by a network.

With reference to the first aspect, in some implementations of the first aspect, the ith S-SSB carries first indication information, and the first indication information indicates the ith third time domain resource.

With reference to the first aspect, in some implementations of the first aspect, the method further includes: sending N pieces of sidelink control information (sidelink control information, SCI) on the N first time-frequency resources, where the ith piece of SCI in the N pieces of SCI indicates at least one fourth time-frequency resource, and the at least one fourth time-frequency resource is used to send an S-SSB.

It should be understood that the fourth time-frequency resource in this application is used to transmit the S-SSB, and the fourth time-frequency resource occupies one slot in time domain and occupies at least one subchannel in frequency domain.

It should be further understood that the fourth time-frequency resource may also be used to send SCI.

With reference to the first aspect, in some implementations of the first aspect, the $i^{th}$ piece of SCI indicates a priority of the S-SSB sent on the at least one fourth time-frequency resource.

With reference to the first aspect, in some implementations of the first aspect, the N first time-frequency resources are located in a first window, and a time interval between the at least one fourth time-frequency resource and the $i^{th}$ first time-frequency resource is greater than or equal to the first window.

The first window may be understood as preset duration. In other words, the N S-SSBs are sent within the preset duration.

It should be understood that a time interval between two adjacent fourth time-frequency resources is greater than or equal to the first window.

With reference to the first aspect, in some implementations of the first aspect, the $i^{th}$ S-SSB carries first information, and the first information indicates duration between the $i^{th}$ time-frequency resource and an end moment of the first window in time domain.

For example, if the second terminal receives, by using a first beam, the N S-SSBs located in the first window, when receiving, by using a second beam, N S-SSBs located in a second window, the second terminal may determine, based on the received first information, whether the first beam can be switched to the second beam. The first beam is different from the second beam, the first window and the second window represent two periods of preset duration, and do not overlap in terms of time.

With reference to the first aspect, in some implementations of the first aspect, the $i^{th}$ piece of SCI further indicates the $i^{th}$ second time-frequency resource.

According to a second aspect, another communication method is provided. The method may be applied to a second terminal. For example, the method may be performed by the second terminal, or may be performed by a component (for example, a chip or a chip system) configured in the second terminal, or may be implemented by a logical module or software that can implement all or some functions of the second terminal. This is not limited in this application.

For example, the method includes: receiving M S-SSBs on M first time-frequency resources, where the M first time-frequency resources are located within a resource pool, and M is an integer greater than 1; and sending feedback information to a first terminal on one or more of M second time-frequency resources, where the feedback information indicates measurement results of one or more S-SSBs in the M S-SSBs, and the M second time-frequency resources are located in the resource pool.

In this application, the M first time-frequency resources and the M second time-frequency resources are all located in the resource pool, and a terminal needs to determine, through resource contention, a time-frequency resource used for transmission for each of time-frequency resources in the resource pool. Therefore, the second terminal receives an S-SSB on the M first time-frequency resources, and sends, on the M second time-frequency resources, the feedback information corresponding to the at least one S-SSB, so that a sending conflict with another terminal can be avoided, to implement beam training on a sidelink.

For example, the first terminal may send the $1^{st}$ S-SSB to the second terminal by using a beam 1. When sending feedback information, the second terminal may send feedback information of the $1^{st}$ S-SSB by using a beam 2, but the first terminal still receives the feedback information by using the beam 1. Alternatively, the first terminal sends the $3^{rd}$ S-SSB to the second terminal by using a beam 3. When sending feedback information, the second terminal may send feedback information of the $3^{rd}$ S-SSB by using a beam 2, but the first terminal still receives the feedback information by using the beam 3. A beam used by the second terminal is not limited in this application.

With reference to the second aspect, in some implementations of the second aspect, feedback information corresponding to the $m^{th}$ S-SSB in the M S-SSBs is sent on the $m^{th}$ second time-frequency resource in the M second time-frequency resources, the $m^{th}$ S-SSB is an S-SSB received on the $m^{th}$ first time-frequency resource in the N first time-frequency resources, and a value of m is any integer from 1 to M.

With reference to the second aspect, in some implementations of the second aspect, the method further includes: measuring the M S-SSBs to obtain measurement results of the M S-SSBs.

With reference to the second aspect, in some implementations of the second aspect, there is one second time-frequency resource between two adjacent first time-frequency resources in time domain.

With reference to the second aspect, in some implementations of the second aspect, the $m^{th}$ second time-frequency resource is located after the $m^{th}$ first time-frequency resource in time domain, there is no first time-frequency resource between the $m^{th}$ first time-frequency resource and the $m^{th}$ second time-frequency resource.

With reference to the second aspect, in some implementations of the second aspect, each second time-frequency resource includes X1 resource elements, the X1 resource elements correspond to X2 thresholds, X1 is an integer greater than or equal to X2, and X2 is an integer greater than or equal to 1.

With reference to the second aspect, in some implementations of the second aspect, an index index of a resource element corresponding to the $x^{th}$ threshold in the X2 thresholds satisfies:

$$\text{index} = (S_{\text{ID}} + D_{ID} + x + delta)\, mod\; X1,$$

where

*delta* is a preconfigured or predefined integer, $S_{\text{ID}}$ is an identifier of the first terminal, and $D_{\text{ID}}$ is an identifier of the second terminal.

With reference to the second aspect, in some implementations of the second aspect, the M second time-frequency resources are located after the M first time-frequency resources in time domain, and at least two of the M second time-frequency resources are located in a same slot.

With reference to the second aspect, in some implementations of the second aspect, received strength of an S-SSB indicated by feedback information sent on the one or more second time-frequency resources is greater than received strength of a remaining S-SSB other than the S-SSB indicated by the feedback information in the N S-SSBs.

With reference to the second aspect, in some implementations of the second aspect, the method further includes: sending or receiving M DCRs on M third time domain resources, where the M third time domain resources are in one-to-one correspondence with the M first time-frequency resources, or the M third time domain resources are in one-to-one correspondence with the M second time-frequency resources.

With reference to the first aspect, in some implementations of the first aspect, the $m^{th}$ first time-frequency resource and the $m^{th}$ third time domain resource are separated by first duration, or the $i^{th}$ second time-frequency resource and the $i^{th}$ third time domain resource are separated by second duration. The first duration and the second duration are preconfigured, predefined, or configured by a network.

With reference to the first aspect, in some implementations of the first aspect, the $m^{th}$ S-SSB carries first indication information, and the first indication information indicates the $m^{th}$ third time domain resource.

With reference to the second aspect, in some implementations of the second aspect, the method further includes: receiving M pieces of SCI on the M first time-frequency resources, where the $m^{th}$ piece of SCI in the M pieces of SCI indicates at least one fourth time-frequency resource, and the at least one fourth time-frequency resource is used to receive an S-SSB.

With reference to the second aspect, in some implementations of the second aspect, the $m^{th}$ piece of SCI indicates a priority of the S-SSB sent on the at least one fourth time-frequency resource.

With reference to the second aspect, in some implementations of the second aspect, the M first time-frequency resources are located in a first window, and a time interval between the at least one fourth time-frequency resource and the $m^{th}$ first time-frequency resource is greater than or equal to the first window.

With reference to the second aspect, in some implementations of the second aspect, the $m^{th}$ S-SSB carries first information, and the first information indicates duration between the $m^{th}$ time-frequency resource and an end moment of the first window in time domain.

With reference to the second aspect, in some implementations of the second aspect, the $m^{th}$ piece of SCI further indicates the $m^{th}$ second time-frequency resource.

For descriptions of beneficial effects of the second aspect, refer to the descriptions of the first aspect. Details are not described herein again.

According to a third aspect, a communication apparatus is provided, configured to perform the method according to any possible implementation of any one of the foregoing aspects. Specifically, the apparatus includes a module configured to perform the method according to any possible implementation of any one of the foregoing aspects.

In a design, the communication apparatus may include modules that perform and that are in one-to-one correspondence with the method/operations/steps/actions described in any one of the foregoing aspects. The module may be a hardware circuit, or may be software, or may be implemented by a hardware circuit in combination with software.

In another design, the communication apparatus is a communication chip. The communication chip may include an input circuit or interface configured to send information or data, and an output circuit or interface configured to receive information or data.

In another design, the communication apparatus is a first terminal, and the first terminal may include a transmitter device configured to send information or data, and a receiver device configured to receive information or data.

In another design, the communication apparatus is a second terminal, and the second terminal may include a transmitter device configured to send information or data, and a receiver device configured to receive information or data.

In another design, the communication apparatus is configured to perform the method in any possible implementation of any one of the foregoing aspects, and the communication apparatus may be configured in a computing board or a server.

According to a fourth aspect, a communication apparatus is provided, including a processor. The processor is configured to invoke a computer program from a memory and run the computer program, to cause the communication apparatus to perform the method according to any one of the possible implementations in the foregoing aspects.

Optionally, the communication apparatus further includes the memory. The memory may be configured to store instructions and data. The memory is coupled to the processor. When the processor executes the instructions stored in the memory, the method described in the foregoing aspects may be implemented.

Optionally, the communication device further includes a transmitter (transmitter machine) and a receiver (receiver machine). The transmitter and the receiver may be separately disposed, or may be integrated together and referred to as a transceiver (transceiver machine).

According to a fifth aspect, a computer program product is provided. The computer program product includes a computer program (which may also be referred to as code or instructions), and when the computer program is run, a computer is caused to perform the method in any possible implementation of any one of the foregoing aspects.

According to a sixth aspect, a computer-readable storage medium is provided. The computer-readable storage medium stores a computer program (which may also be referred to as code or instructions), and when the computer program runs on a computer, the computer is caused to perform the method in any possible implementation of the foregoing aspects.

According to a seventh aspect, this application provides a chip system. The chip system includes at least one processor configured to support implementation of a function in any one of the foregoing aspects, for example, receiving or processing data in the foregoing methods.

In a possible design, the chip system further includes a memory, the memory is configured to store program instructions and data, and the memory is located inside or outside the processor.

Optionally, the chip system may include a chip, or may include a chip and another discrete component.

According to an eighth aspect, a communication system is provided, including a first terminal and a second terminal. The first terminal is configured to implement the method according to any possible implementation of the first aspect, and the second terminal is configured to implement the method according to any possible implementation of the second aspect.

In a possible design, the communication system may further include another device that interacts with the first terminal and/or the second terminal in the solutions provided in this application.

## BRIEF DESCRIPTION OF DRAWINGS

FIG. 1 and FIG. 2 are diagrams of communication scenarios to which embodiments of this application are applicable;
FIG. 3 is a diagram of a structure of a user-plane protocol stack;
FIG. 4 is a schematic flowchart of a link establishment method;
FIG. 5 is a diagram of a time domain location of S-SSB transmission;
FIG. 6 is a diagram of a location relationship between three groups of time unit sets in time domain;
FIG. 7 is a diagram of a time domain structure of an S-SSB;
FIG. 8 is a diagram of a frequency domain structure of an S-SSB;
FIG. 9 is a diagram of an indication manner of a bitmap;
FIG. 10 is a diagram of a subchannel according to an embodiment of this application;
FIG. 11 is a diagram of a configuration manner of a PSFCH in a resource pool;
FIG. 12 is a diagram of another indication manner of a bitmap;
FIG. 13 is a diagram of a correspondence between a PSSCH slot and a PSFCH slot;
FIG. 14 is a diagram of a correspondence between a time-frequency resource of a PSSCH and a time-frequency resource of a PSFCH;
FIG. 15 is a diagram of a location relationship between a first time-frequency resource and a second time-frequency resource in time domain according to an embodiment of this application;
FIG. 16 is a diagram of a correspondence between a first time-frequency resource and a second time-frequency resource according to an embodiment of this application;
FIG. 17 is a diagram of another location relationship between a first time-frequency resource and a second time-frequency resource according to an embodiment of this application;
FIG. 18 is a schematic flowchart of a communication method according to an embodiment of this application;
FIG. 19 is a diagram of a location relationship between a first time-frequency resource and a second time-frequency resource according to an embodiment of this application;
FIG. 20 is a diagram of a correspondence between a first time-frequency resource and a second time-frequency resource according to an embodiment of this application;
FIG. 21 is a diagram of another location relationship between a first time-frequency resource and a second time-frequency resource according to an embodiment of this application;

FIG. 22 is a diagram of a location relationship between N second time-frequency resources according to an embodiment of this application;

FIG. 23 is a diagram of a second time-frequency resource according to an embodiment of this application;

FIG. 24 is a diagram of a manner of indicating a fourth time-frequency resource by SCI according to an embodiment of this application;

FIG. 25 is a diagram of a location relationship between a fourth time-frequency resource and a first window according to an embodiment of this application;

FIG. 26 is a diagram of a time domain structure of an S-SSB according to an embodiment of this application;

FIG. 27 and FIG. 28 are diagrams of a frequency domain structure of an S-SSB according to an embodiment of this application; and

FIG. 29 and FIG. 30 are diagrams of communication apparatuses according to an embodiment of this application.

## DESCRIPTION OF EMBODIMENTS

The following describes technical solutions of this application with reference to accompanying drawings.

To describe the technical solutions of this application more clearly, the following explains related concepts in this application.

1. Beam: The beam (beam) is a communication resource. The beam may be a wide beam, a narrow beam, or another type of beam. Beams may be classified into transmit beams and receive beams. A technology for forming the beam may be a beamforming technology or another technology means. The beamforming technology may be specifically a digital beamforming technology, an analog beamforming technology, or a hybrid digital/analog beamforming technology. Beamforming includes transmit beamforming and receive beamforming.

Optionally, the beam may be understood as a spatial resource, and may be a transmit or receive precoding vector with energy transmission directivity/directivity. In addition, the transmit or receive precoding vector can be identified by index information. The energy transmission directivity may mean that at a specific spatial location, a signal precoded by the precoding vector is received with good received power. For example, a received demodulation signal-to-noise ratio is satisfied. The energy transmission directivity may also mean that, when received by using the precoding vector, identical signals sent from different spatial locations are received with different received power. It may be understood that using different beams by a device means using different spatial resources by the device. Optionally, distinguishing is further made between an uplink spatial resource and/or a downlink spatial resource, or between a spatial resource for sending information and a spatial resource for receiving information.

The transmit beam is a beam that has spatial directivity and that is formed by a sent signal when a transmitting-end device uses a specific beamforming weight during signal sending. In an uplink direction, the transmitting-end device may be a terminal. In a downlink direction, the transmitting-end device may be a network device. The receive beam is a beam that has spatial directivity and that is formed by a received signal when a receiving-end device uses a specific beamforming weight during signal reception. In an uplink direction, the receiving-end device may be a network device. In a downlink direction, the receiving-end device may be a terminal.

Transmit beamforming means that when a transmitting-end device with an antenna array sends a signal, a specific amplitude and phase are set on each antenna element of the antenna array, so that the sent signal has specific spatial directivity, that is, has high signal power in some directions, and has low signal power in some other directions. A direction with highest signal power is a direction of a transmit beam. The antenna array includes a plurality of antenna elements. The additional specific amplitude and phase are a beamforming weight.

Receive beamforming means that when a receiving-end device with an antenna array receives a signal, a specific amplitude and phase are set on each antenna element of the antenna array, so that a power gain of the received signal is directional. That is, the power gain is high when the signal is received in some directions, and the power gain is low when the signal is received in some other directions. A direction with a highest power gain when the signal is received is a direction of a receive beam. The antenna array includes a plurality of antenna elements. The additional specific amplitude and phase are a beamforming weight.

It should be noted that different beams may be considered as different resources. Same information or different information may be sent by using (or through) different beams. A beam pair is established based on a concept of a beam. A beam pair usually includes one transmit beam of a transmitting-end device and one receive beam of a receiving-end device. It should be noted that, unless otherwise specified, a transmit beam in the following is a transmit beam of a network device, and a receive beam in the following is a receive beam of a terminal.

2. A synchronization signal block includes three parts: a primary synchronization signal (primary synchronization signals, PSS), a secondary synchronization signal (secondary synchronization signals, SSS), and a physical broadcast channel block (physical broadcasting channel block, PBCH). In other words, the PSS, the SSS, the PBCH, and a PBCH DMRS are received in a plurality of consecutive orthogonal frequency division multiplexing (orthogonal frequency division multiplexing, OFDM) symbols, and then form the SSB. For example, in a sidelink communication system, one S-SSB slot includes 14 OFDM symbols, and is mainly used for downlink synchronization.

It should be understood that a slot in which the SSB is transmitted may also be used to transmit SCI in this application.

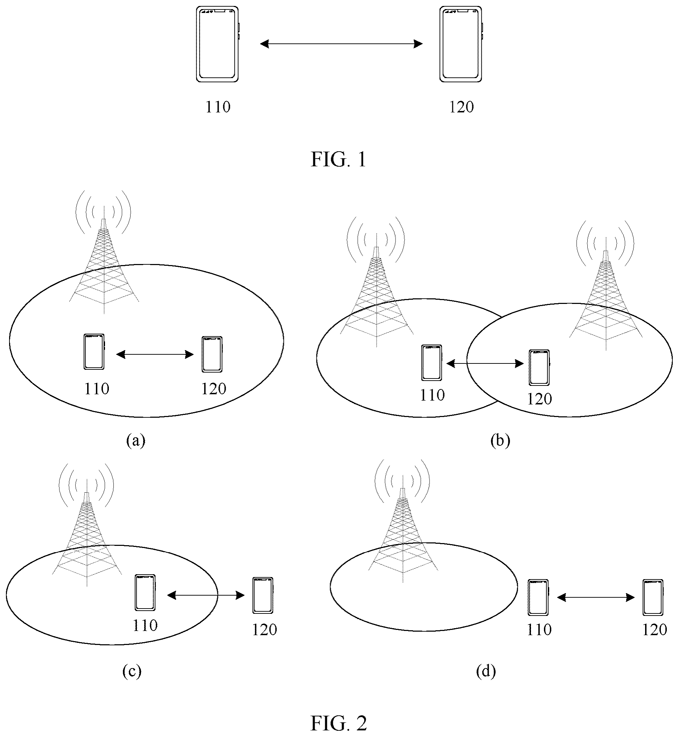

For ease of understanding of embodiments of this application, a communication scenario applicable to embodiments of this application is first described in detail with reference to FIG. 1 and FIG. 2.

FIG. 1 is a diagram of a communication scenario 100 applicable to an embodiment of this application. In the communication scenario 100 shown in FIG. 1, a terminal 110 and a terminal 120 may communicate with each other by using a wireless communication technology. A communication link between the terminal 110 and the terminal 120 may be referred to as a sidelink (sidelink, SL) or another name. An air interface (air interface) for direct communication between the terminal 110 and the terminal 120 is referred to as PC5 or another name. This is not limited in embodiments of this application either.

The terminal in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal may be a device that provides voice/data connectivity for a user, for example, a handheld device or a vehicle-mounted device that has a wireless connection function. Currently, some examples of the terminal are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal in the 5G network, a terminal in a future evolved public land mobile network (public land mobile network, PLMN), and the like. This is not limited in embodiments of this application.

By way of example but not limitation, in this application, the terminal may be a terminal in an internet of things (internet of things, IoT) system. The internet of things is an important part of the future information technology development. Its main technical feature is to connect articles and networks through communication technology, to implement an intelligent network of man-machine interconnection and interconnection of things. For example, the terminal in embodiments of this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or accessories of a user. Wearable devices are not only hardware devices, and can implement powerful functions through software support, data interaction, and cloud interaction. In a broad sense, wearable smart devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring vital signs.

By way of example but not limitation, in embodiments of this application, the terminal may alternatively be a terminal in machine type communication (machine type communication, MTC). In addition, the terminal may alternatively be a vehicle-mounted module, a vehicle-mounted assembly, a vehicle-mounted component, a vehicle-mounted chip, a vehicle-mounted unit, or the like that is built in the vehicle as one or more components or units. The vehicle may implement the method provided in this application through the in-vehicle module, the in-vehicle assembly, the in-vehicle component, the in-vehicle chip, the in-vehicle unit, or the like. Therefore, embodiments of this application may also be applied to an internet of vehicles, for example, a vehicle to everything (vehicle to everything, V2X), a long term evolution-vehicle technology (long term evolution-vehicle, LTE-V), or a vehicle-to-vehicle (vehicle-to-vehicle, V2V) technology.

By way of example but not limitation, in embodiments of this application, the terminal may alternatively be a terminal in machine type communication (machine type communication, MTC). In addition, the terminal may alternatively be a vehicle-mounted module, a vehicle-mounted assembly, a vehicle-mounted component, a vehicle-mounted chip, a vehicle-mounted unit, or the like that is built in the vehicle as one or more components or units. The vehicle may implement the method provided in this application through the in-vehicle module, the in-vehicle assembly, the in-vehicle component, the in-vehicle chip, the in-vehicle unit, or the like. Therefore, embodiments of this application may also be applied to an internet of vehicles, for example, a vehicle to everything (vehicle to everything, V2X), a long term evolution-vehicle technology (long term evolution-vehicle, LTE-V), or a vehicle-to-vehicle (vehicle-to-vehicle, V2V) technology.

It should be understood that FIG. 1 is merely a simplified diagram for ease of understanding. In another possible scenario, the communication scenario may further include another device that is not shown in FIG. 1. For example, the scenario shown in FIG. 1 may further include a network device (as shown in FIG. 2). When the scenario shown in FIG. 1 includes the network device, both the terminal 110 and the terminal 120 may be within coverage of the network device (as shown in (a) and (b) in FIG. 2). Alternatively, neither the terminal 110 nor the terminal 120 is within coverage of the network device (as shown in (c) in FIG. 2). Alternatively, one of the terminal 110 and the terminal 120 may be within coverage of the network device 110, and the other is not within coverage of the network device 110 (as shown in (d) in FIG. 2).

It should be noted that, in the scenarios shown in (a), (b), and (d) in FIG. 2, the terminal 110 is located within network coverage of the network device, and the terminal 110 may perform sidelink communication with the terminal 120 through resource scheduling by the network device. A resource scheduled by the network device may be referred to as a licensed resource or a licensed frequency band. Alternatively, the terminal 110 and the terminal 120 may communicate with each other in a manner without scheduling by the network device. For example, the terminal 110 may select a resource, that is, select, from a resource pool, a resource used for sidelink communication, to perform sidelink communication with the terminal 120. The resource may be referred to as an unlicensed resource or an unlicensed frequency band. In the scenario shown in (c) in FIG. 2, both the terminal 110 and the terminal 120 are located outside network coverage of the network device. In this case, the terminal 110 and the terminal 120 cannot perform sidelink communication through resource scheduling by the network device, and the terminal needs to perform sidelink communication through resource self-selection. The resource in this application is a time-frequency resource.

It should be understood that the network device in the scenario shown in FIG. 2 may be a device that communicates with the terminal. The network device may also be referred to as an access network device or a radio access network device, and may be a transmission reception point (transmission reception point, TRP), or may be an evolved network device (evolved NodeB, eNB, or eNodeB) in an LTE system, or may be a home network device (for example, a home evolved NodeB, or a home NodeB, HNB), or a base band unit (base band unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the network device may be a metro network device, a micro network device, a pico network device, a femto network device, or the like. This is not limited in this application.

In a network structure, the network device may include a central unit (centralized unit, CU) node, a distributed unit (distributed unit, DU) node, a radio access network (radio access network, RAN) device including a CU node and a DU node, or a RAN device including a CU control plane node (CU-CP node), a CU user plane node (CU-UP node), and a DU node.

In conclusion, a frequency band used for sidelink communication may be an unlicensed frequency band, a licensed frequency band, or a dedicated frequency band. However, it should be noted that in the unlicensed frequency band, a transmit node needs to use a spectrum resource in a contention manner. Specifically, the transmit node contends for a channel in a listen-before-talk (listen-before-talk, LBT) manner. The LBT mechanism is essentially a channel access rule based on random back-off (random back-off). Before accessing a channel and starting to send data, a terminal needs to sense (sense) whether the channel is idle (idle). If the channel has remained idle for a specific period of time, the terminal can occupy the channel. If the channel is not idle, the terminal can occupy the channel only after the channel is restored to being idle.

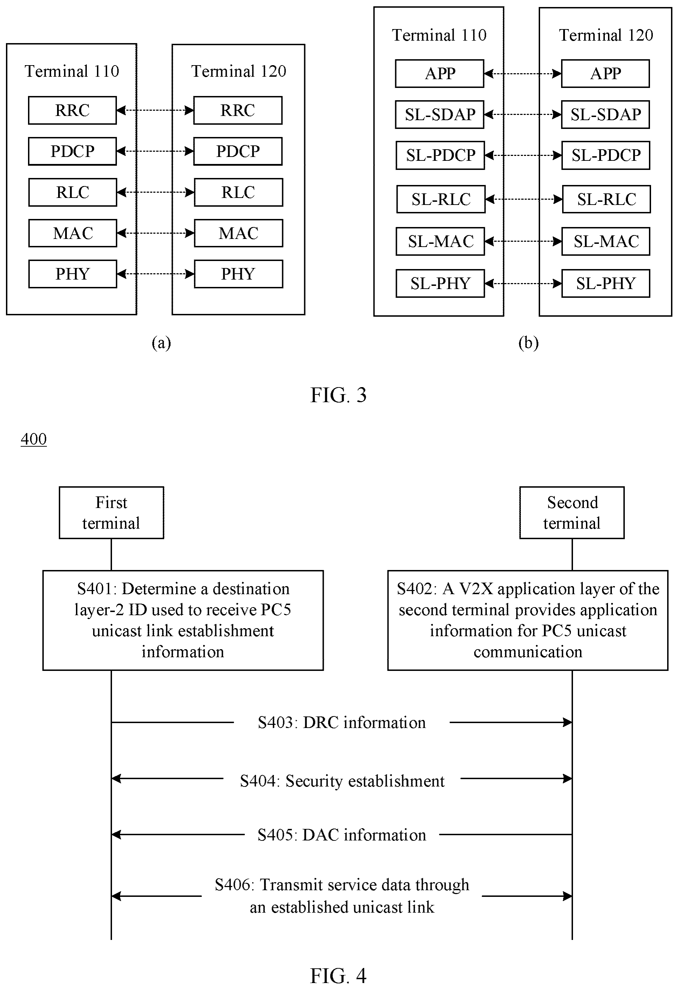

For example, when the terminal 110 and the terminal 120 shown in FIG. 1 and FIG. 2 communicate with each other on a sidelink, a structure of a control plane protocol stack is shown in (a) in FIG. 3. Interaction of at least one control plane protocol layer such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical (physical, PHY) layer is included between the terminal 110 and the terminal 120.

For example, when the terminal 110 and the terminal 120 shown in FIG. 1 and FIG. 2 communicate with each other on a sidelink, a structure of a user plane protocol stack is shown in (b) in FIG. 3. Interaction of at least one user plane protocol layer such as an application (application, APP) layer, a sidelink service data adaptation protocol (sidelink service data adaptation protocol, SL-SDAP) layer, a sidelink packet data convergence protocol (sidelink packet data convergence protocol, SL-PDCP) layer, a sidelink radio link control (sidelink radio link control, SL-RLC) layer, a sidelink medium access control (sidelink medium access control, SL-RLC) layer, and a sidelink physical (sidelink physical, SL-PHY) layer is included between the terminal 110 and the terminal 120.

Optionally, the SL-SDAP layer, the SL-PDCP layer, the SL-RLC layer, the SL-RLC layer, the SL-PHY layer, and the like shown in (b) in FIG. 3 may be referred to as an access stratum (access stratum, AS).

It should be understood that, before the terminal 110 performs sidelink communication with the terminal 120, a synchronization procedure needs to be completed first. After synchronization is completed, a link needs to be established between the terminals before data transmission is performed. With reference to FIG. 4, the following describes an establishment procedure by using unicast layer-2 (layer-2) link establishment as an example.

FIG. 4 is a flowchart of a link establishment method 400. As shown in FIG. 4, the method 400 may include S401 to S406. The following describes the steps in detail with reference to FIG. 4. A first terminal in FIG. 4 may be the terminal 110, and a second terminal may be the terminal 120; or the first terminal in FIG. 4 may be the terminal 120, and the second terminal may be the terminal 110.

S401: The first terminal determines a destination layer-2 identity (identity, ID) used to receive PC5 unicast link establishment information.

The used layer-2 ID depends on a communication peer. The layer-2 ID of the communication peer is identified by an application layer ID, and may be determined in a PC5 link establishment procedure, or may be obtained in previous vehicle to everything (vehicle to everything, V2X) communication. An initial signaling for establishing a PC5 unicast link may use a known layer-2 ID of the communication peer, or a default destination layer-2 ID associated with a V2X service type configured for establishing the PC5 unicast link.

S402: A V2X application layer of the second terminal provides application information for PC5 unicast communication. The application information includes the V2X service type and an application layer ID of the initial UE.

S403: The first terminal sends direct communication request (direct communication request, DCR) information. The DCR information is used to start a unicast layer-2 link establishment procedure.

For example, the DCR includes at least one of the following: source user information: the application layer ID (UE-1) of the initial UE; target user information, that is, an application layer ID (UE-2) of the target UE, that needs to be included if the V2X application layer provides the application layer ID of the target UE at S2; V2X service information: V2X service type information for requesting layer-2 link establishment; and security information: information for security establishment.

For example, the first terminal sends the DCR by using a source layer-2 ID and a destination layer-2 ID through PC5 broadcast or unicast.

S404: The first terminal and the second terminal perform security establishment.

For example, if the DCR information does not include the target user information, the second terminal responds by establishing security with the first terminal. When security protection is enabled, the first terminal sends QoS information and/or an IP address configuration to the second terminal. The IP address configuration may include "IPv6 Router", "IPv6 address allocation not supported", or a link-local IPv6 address.

S405: The second terminal sends a direct communication accept (direct communication accept, DCA) message.

The DCA includes source user information: an application layer ID, QoS information, or an IP address configuration of the UE that sends the DCA information. The IP address configuration includes "IPv6 Router", "IPv6 address allocation not supported", or a link-local IPv6 address.

S406: The first terminal and the second terminal transmit service data through an established unicast link.

In the sidelink communication scenarios shown in FIG. 1 and FIG. 2, if a terminal in communication is a half-duplex device, it indicates that the terminal does not have a capability of simultaneous sending and receiving. In other words, a same terminal can only be in a state of receiving or sending information at a moment. In other words, when a terminal sends an S-SSB, the terminal cannot receive an S-SSB.

Currently, to enable all terminals in a sidelink system to synchronize with a global navigation satellite system (global navigation satellite system, GNSS) or a cell (cell) or align with a same synchronization source, three candidate S-SSB time unit sets are specified in a protocol, and the time unit sets are configured by using higher layer signaling. Configuration information of each candidate S-SSB time unit set may include the following three parameters: 1. $N_{period}^{S-SSB}$: represents a quantity of S-SSBs transmitted in a period of 160 ms, and there are different quantities in different subcarrier spacings (sub-carrier space, SCS), as shown in Table 1; 2. $N_{offset}^{S-SSB}$: represents a slot offset between the first S-SSB transmitted in each period and a start point of the period; and 3. $N_{interval}^{S-SSB}$: represents a slot interval between two adjacent S-SSBs in each period.

Table 1

| Frequency range (frequency range, FR) | Subcarrier spacing | Possible value of $N_{period}^{S-SSB}$ |
|---|---|---|
| FR1 | 15 kHz | 1 |
| | 30 kHz | 1, 2 |
| | 60 kHz | 1,2,4 |
| FR2 | 60 kHz | 1, 2, 4, 8, 16, 32 |
| | 120 kHz | 1, 2, 4, 8, 16, 32, 64 |

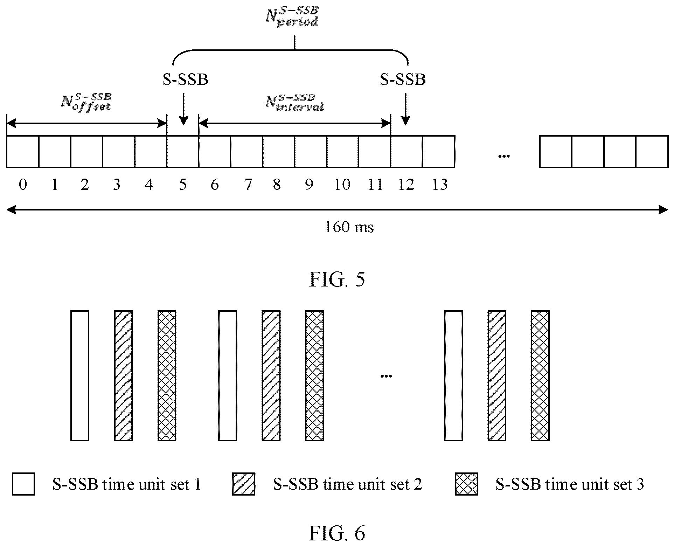

A location at which a terminal transmits an S-SSB is statically or semi-statically (semi-static) determined based on the three parameters included in the configuration information of each candidate S-SSB time unit set. For example, when $N_{period}^{S-SSB} = 2$, $N_{offset}^{S-SSB} = 5$, and $N_{interval}^{S-SSB} = 6$, time domain locations for transmitting S-SSBs are shown in FIG. 5. For each period of 160 ms, the terminal transmits the S-SSBs in two slots with slot indexes 5 and 12. It should be understood that, when three groups of the foregoing parameters are configured, three groups of S-SSB time unit sets may be obtained. FIG. 6 shows a diagram of a relationship between locations of the three groups of time unit sets in time domain.

In some embodiments, the S-SSB broadcast by the terminal includes a 56-bit physical sidelink broadcast channel (physical sidelink broadcast channel, PSBCH) payload (payload), and the PSBCH payload includes the following fields (field):

1. sl-TDD-Config field: a 12-bit bit sequence, indicating uplink and downlink time division duplex (time division duplex, TDD) information;
2. inCoverage field: a 1-bit Boolean variable, where when a value is "true (true)", it indicates that the terminal that transmits the S-SSB is in network coverage, or the terminal uses the GNSS as a synchronization source;
3. directFrameNumber field: a 10-bit bit sequence, indicating a direct frame number (direct frame number, DFN) corresponding to a radio frame used to transmit the S-SSB;
4. slotIndex field: a 7-bit bit sequence, indicating a slot index corresponding to a slot used to transmit the S-SSB; and
5. reservedBits field: a 2-bit bit sequence, used as reserved bits for subsequent function extension.

In conclusion, after 24 cyclic redundancy check (cyclic redundancy check, CRC) bits are added after 32 bits, the 56-bit PSBCH payload transmitted in the S-SSB is formed. For example, after successfully decoding the PSBCH payload, a receiving end may align a radio frame and a slot with the transmitting end of the S-SSB based on the 10-bit directFrameNumber field and the 7-bit slotIndex field, to complete a basic synchronization process.

It should be noted that, when a plurality of terminals need to broadcast S-SSBs, the plurality of terminals may transmit the S-SSBs in a same slot by using same radio resource control (radio resource control, RRC) signaling or preconfigured S-SSB configuration information, and PSBCH payloads of the S-SSBs transmitted by the plurality of terminals are the same. In addition, another terminal may determine transmission locations of S-SSBs by using same RRC signaling or preconfigured S-SSB configuration information, then simultaneously receive the S-SSBs from the plurality of terminals at the transmission locations of the S-SSBs, and combine and decode the S-SSBs of the plurality of terminals, to improve receiving performance of the S-SSBs.

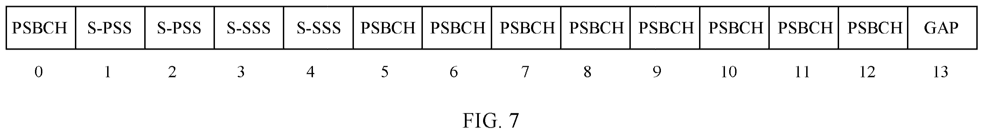

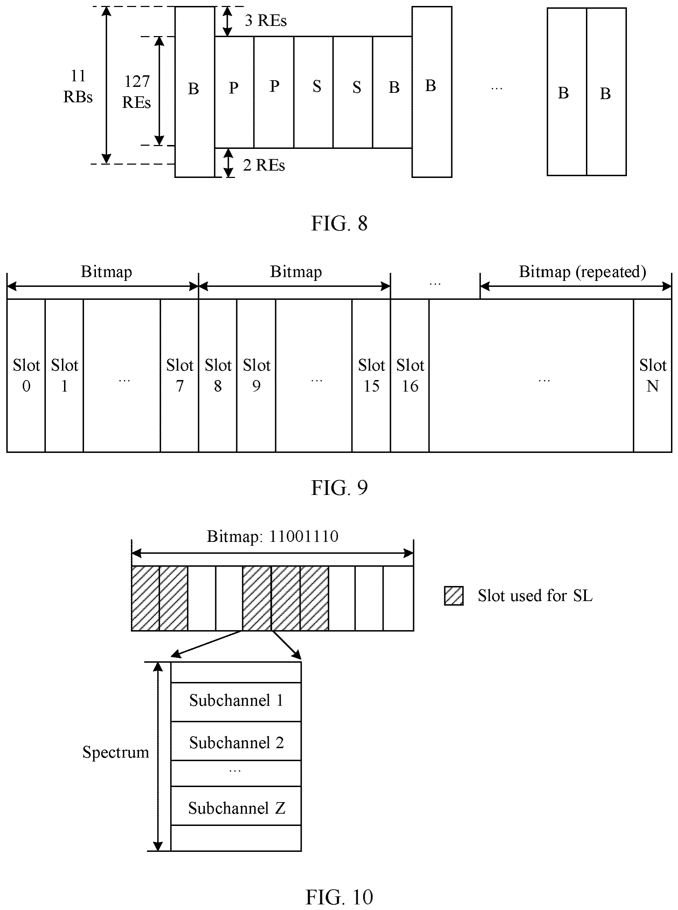

The following uses an S-SSB slot with a slot length of 14 OFDM symbols as an example to describe a time domain structure and a frequency domain structure of an S-SSB with reference to FIG. 7 and FIG. 8.

FIG. 7 shows a time domain structure of an S-SSB. As shown in FIG. 7, a slot length of one S-SSB is 14 orthogonal frequency division multiplexing (orthogonal frequency division multiplexing) symbols. The 0th symbol is used for automatic gain control (automatic gain control, AGC), and is a copy of the 5th PSBCH symbol. The 1st and the 2nd symbol locations are used to transmit a sidelink primary synchronization signal (sidelink primary synchronization signal, S-PSS). The 3rd and the 4th symbol locations are used to transmit a sidelink secondary synchronization signal S-SSS (sidelink secondary synchronization signal, S-SSS). The last symbol is set to empty, that is, a gap (GAP) symbol, and is used for receive/transmit switching. Remaining symbol locations are used to transmit PSBCH information.

FIG. 8 shows a frequency domain structure of an S-SSB. As shown in FIG. 8, a PSBCH in one S-SSB includes 132 consecutive subcarriers, and the 132 subcarriers are numbered from 0 to 131. When one resource block (resource block, RB) includes 12 subcarriers, the PSBCH in the S-SSB may occupy 11 RBs. An S-SSS and an S-PSS each are a sequence with a length of 127, and therefore each occupy 127 resource elements (resource element, RE).

In conclusion, an S-SSB resource configuration shown in Table 2 may be obtained based on the time-frequency structures of the S-SSB shown in FIG. 7 and FIG. 8.

Table 2

| Signal or channel | OFDM symbol number *l* relative to a start location of a PSBCH in one S-SSB | Subcarrier number k relative to a start location of one S-SS/PSBCH block |
|---|---|---|
| S-PSS | 1, 2 | 2, 3, ..., 127, 128 |
| S-SSS | 3, 4 | 2, 3, ..., 127, 128 |
| Set to 0 | 1, 2, 3, 4 | 0, 1, 129, 130, 131 |
| PSBCH | $0, 5, 6, \ldots, N_{\text{symb}}^{\text{S-SSB}} - 1$ | 0, 1, ..., 131 |
| Demodulation reference signal (demodulation reference signal, DMRS) | $0, 5, 6, \ldots, N_{\text{symb}}^{\text{S-SSB}} - 1$ | 0, 4, 8, ..., 128 |

It can be learned from Table 2 that the S-PSS or the S-SSS in one S-SSB occupies 127 consecutive subcarriers from the 2nd subcarrier to the 128th subcarrier, and the 0th, 1st, 129th, 130th, and 131st subcarriers are set to 0. The PSBCH and the DMRS of the PSBCH occupy all the 132 subcarriers.

For example, in the scenarios shown in FIG. 1 and FIG. 2, the terminals may communicate with each other through resource self-selection. For example, the terminal may select a resource from a resource pool for sidelink communication. That is, a time-frequency resource for sidelink communication is configured based on an SL communication resource pool. The SL communication resource pool may be considered as a set of time resources and frequency resources used for SL communication. For a time resource in the SL communication resource pool, a network device uses a bitmap and periodically repeats the bitmap to indicate a set of slots used for SL communication in all slots in a system. For example, as shown in FIG. 9, a quantity of symbols used for SL transmission in each slot may be fixed R symbols (R is an integer greater than 0). For a frequency resource in the SL communication resource pool, the network device divides a frequency band used for SL communication into several subchannels. Each subchannel includes a specific quantity of RBs. A frequency domain resource used for sidelink transmission is determined by indicating a sequence number of the 1st resource block of the frequency resource used for SL communication and a quantity of occupied subchannels. In other words, an SL communication resource is scheduled at a granularity of a subchannel in frequency domain. For example, as shown in FIG. 10, a total quantity of subchannels included in the communication resource pool is Z, and a quantity of resource blocks included in each subchannel is $z_{\text{CH}}$. One slot that can be used for sidelink communication may occupy one or more subchannels in frequency domain.

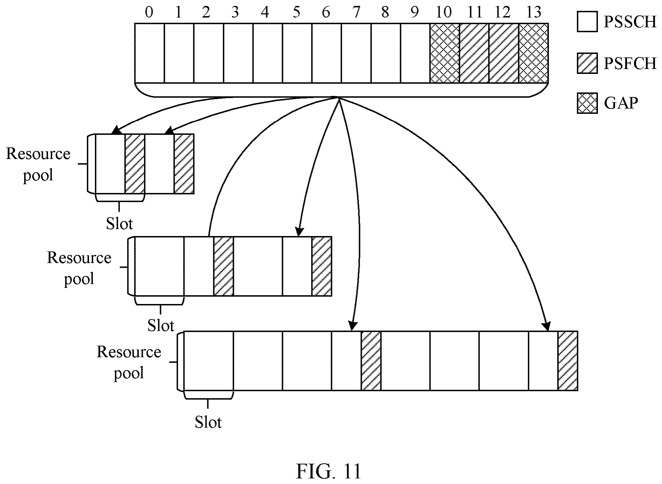

After the time-frequency resource used for sidelink transmission is determined in the resource pool, the terminal may transmit a PSSCH on the determined resource. It may be understood that, whether the PSSCH sent by a transmitting end is successfully received may be acknowledged by a receiving end by feeding back acknowledgment (acknowledgement, ACK) or negative acknowledgment (non-acknowledgment, NACK) information. The ACK/NACK information is transmitted through a PSFCH. A PSFCH resource is a periodic resource configured in the resource pool, and a period configuration parameter $N_{\text{PSSCH}}^{\text{PSFCH}}$ of the PSFCH resource may be 0, 1, 2, or 4. $N_{\text{PSSCH}}^{\text{PSFCH}} = 0$ indicates that there is no PSFCH resource configuration in the resource pool, and PSFCH sending is not enabled in the resource, that is, physical layer HARQ feedback is not supported, that is, ACK/NACK information cannot be fed back. $N_{\text{PSSCH}}^{\text{PSFCH}} = 1,2,4$ indicates that there is one PSFCH feedback slot in every $N_{\text{PSSCH}}^{\text{PSFCH}}$ SL slots in a time window, that is, ACK/NACK information can be fed back. FIG. 11 shows a configuration of a PSFCH in a resource pool. As shown in FIG. 11, in a feedback slot of each PSFCH, the PSFCH occupies the last two symbols before a GAP, and a PSFCH slot periodically appears in time domain.

Because a frequency domain resource in the resource pool includes a plurality of PRBs, a frequency domain resource corresponding to one PSFCH feedback slot may include a plurality of PRBs. Currently, whether a PRB in the resource pool can be used as a PSFCH resource is indicated by using a bitmap (bitmap) with a bit information length that is the same as a quantity of PRBs in the resource pool. For example, 1 in the bitmap indicates that a corresponding PRB can be used for PSFCH transmission, and 0 in the bitmap indicates that a corresponding PRB resource cannot be used for PSFCH transmission. Alternatively, 0 in the bitmap indicates that a corresponding PRB can be used for PSFCH transmission, and 0 in the bitmap indicates that a corresponding PRB resource cannot be used for PSFCH transmission. Further, if a PSFCH resource is used to transmit a hybrid automatic repeat request (hybrid automatic repeat request, HARQ)-ACK (HARQ-ACK for short), the PSFCH resource may be represented by a bitmap identified by "sl-PSFCH-RB-Set". That is, a PRB corresponding to a bit value "1" in the bitmap can be used to transmit the HARQ-ACK, a PRB corresponding to a bit value "0" in the bitmap cannot be used to transmit the HARQ-ACK. Alternatively, a PRB corresponding to a bit value "0" in the bitmap can be used to transmit the HARQ-ACK, and a PRB corresponding to a bit value "1" in the bitmap cannot be used to transmit the HARQ-ACK. If a PSFCH resource is used for inter-UE coordination (inter-UE coordination, IUC) scheme2 (scheme2) conflict indication, the PSFCH resource may be represented by a "sl-RB-SetPSFCH" bitmap. That is, a PRB corresponding to a bit value "1" in the bitmap can be used for IUC scheme2 conflict indication, and a PRB corresponding to a bit value "0" in the bitmap cannot be used for IUC scheme2 conflict indication.

It should be understood that locations at which bit values are 1 in "sl-PSFCH-RB-Set" and "sl-RB-SetPSFCH" do not overlap. This can avoid a same location being used for both HARQ-ACK transmission and IUC scheme2 conflict indication.

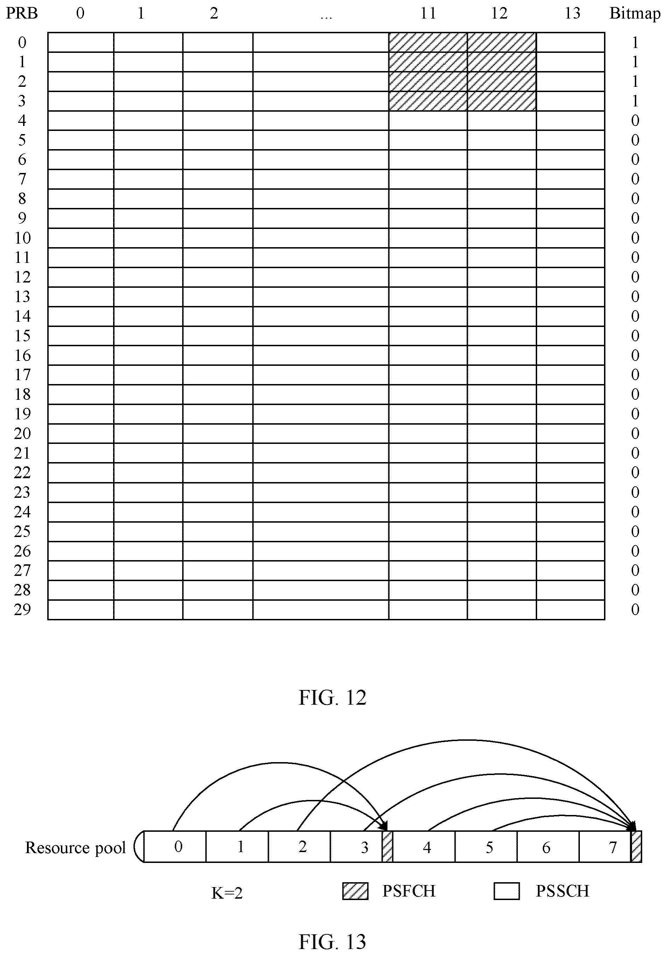

FIG. 12 shows an indication manner of a bitmap. As shown in FIG. 12, a resource pool includes three subchannels, and each subchannel includes 10 PRBs. In this case, a bitmap that indicates PSFCH frequency domain resources includes 3*10=30 bits in total. In a slot including a PSFCH transmission resource, the bitmap may indicate that the first four PRBs in the resource pool may be used for PSFCH feedback. In other words, the four PRB resources may be used to transmit a HARQ-ACK feedback.

It should be understood that FIG. 2 is merely an example. For example, in some embodiments, a PSFCH may also be used for IUC scheme2 conflict indication. In other words, if a PSFCH resource is configured in the resource pool, all the PSFCH resource may be used to transmit a specific type of information, for example, feedback information or a conflict indication; or a part of the PSFCH resource may be used to transmit one type of information, and a part of the PSFCH resource may be used to transmit another type of information. For example, a part is used for feedback information, and a part is used for scheme2 conflict indication. This is not limited in this application.

Because PSFCHs are periodically configured, every plurality of basic units (each basic unit occupies one time-frequency resource of one slot in time domain and one subchannel in frequency domain) correspond to one PSFCH feedback slot. To avoid a feedback conflict between a plurality of PSSCHs, a terminal may determine, according to Formula (1) below, a quantity of PRBs that correspond to each basic unit and that are used for feedback:

$$M_{\text{subch, slot}}^{\text{PSFCH}} = M_{\text{PRB, set}}^{\text{PSFCH}} / \left( N_{\text{subch}} \cdot N_{\text{PSSCH}}^{\text{PSFCH}} \right) \tag{1}$$

$M_{\text{subch, slot}}^{\text{PSFCH}}$ represents a quantity of PSFCH feedback resources corresponding to a resource that occupies one slot in time domain and one subchannel in frequency domain, $M_{\text{PRB, set}}^{\text{PSFCH}}$ represents a quantity of PRBs of a PSFCH frequency domain resource, that is, a sum of quantities of bits with values 1 in a bitmap indicating the PSFCH frequency domain resource, $N_{\text{subch}}$ represents a quantity of subchannels included in the resource pool, and $N_{\text{PSSCH}}^{\text{PSFCH}}$ is a period of a PSFCH feedback slot.

For the i$^{\text{th}}$ slot in W bundled PSSCH slots, if a frequency domain subchannel number in a resource pool is j, a PSFCH resource corresponding to the i$^{\text{th}}$ slot is:

$$\left[ \left( i + j \cdot N_{\text{PSSCH}}^{\text{PSFCH}} \right) \cdot M_{\text{subch, slot}}^{\text{PSFCH}}, \left( i + 1 + j \cdot N_{\text{PSSCH}}^{\text{PSFCH}} \right) \cdot M_{\text{subch, slot}}^{\text{PSFCH}} - 1 \right] \tag{2}$$

A value of W is a configuration period of a PSFCH feedback slot, that is, $W = N_{\text{PSSCH}}^{\text{PSFCH}}$. For meanings of remaining parameters, refer to the descriptions in Formula (1). Details are not described herein again.

Second, due to a limitation of a decoding capability of the receiving end, it is difficult for the receiving end to immediately perform feedback after a PSSCH is received. Therefore, a minimum time interval K between a PSSCH and a PSFCH feedback resource is defined in the standard. That is, the PSSCH is fed back in the 1$^{\text{st}}$ available slot including the PSFCH resource, and the 1$^{\text{st}}$ available slot and a slot in which the PSSCH is located are separated by at least K slots. A value of K is configured in the resource pool. As shown in FIG. 13, when K=2, and $N_{\text{PSSCH}}^{\text{PSFCH}} = 4$, feedback of PSSCHs carried in a slot 0 and a slot 1 may be on a PSFCH resource in a slot 3, and feedback of PSSCHs carried in a slot 2, the slot 3, a slot 4, and a slot 5 are on a PSFCH resource in a slot 7. Because feedback for the slot 2, the slot 3, the slot 4, and the slot 5 are on a PSFCH resource in one slot, a slot length of the slot 2 to the slot 5 may be referred to as a PSSCH bundling window length, and the slot 2 to the slot 5 are also referred to as four bundled PSSCH slots.

However, on a sidelink, because there are multicast and broadcast sending manners, a plurality of terminals need to feed back information on a same time-frequency resource. To enable a transmitting end to distinguish between feedback results of different terminals for a same PSSCH, code division multiplexing may be performed on a feedback resource corresponding to the PSSCH.

In some embodiments, if one PSSCH occupies one slot in time domain and occupies $N_{subch}^{PSSCH}$ subchannels in frequency domain, a quantity of PSFCH feedback resource pairs corresponding to the PSSCH satisfies Formula (3):

$$C = N_{subch}^{PSSCH} \cdot M_{subch, slot}^{PSFCH} \cdot N_{CS}^{PSFCH} \qquad (3)$$

$N_{CS}^{PSFCH}$ represents a quantity of PSFCH sequence pairs that can be multiplexed on a PSFCH resource of one PRB configured in the resource pool, $M_{subch, slot}^{PSFCH}$ represents a quantity of PRBs of a PSFCH resource allocated to each subchannel, and C represents the quantity of PSFCH feedback resource pairs corresponding to the PSSCH.

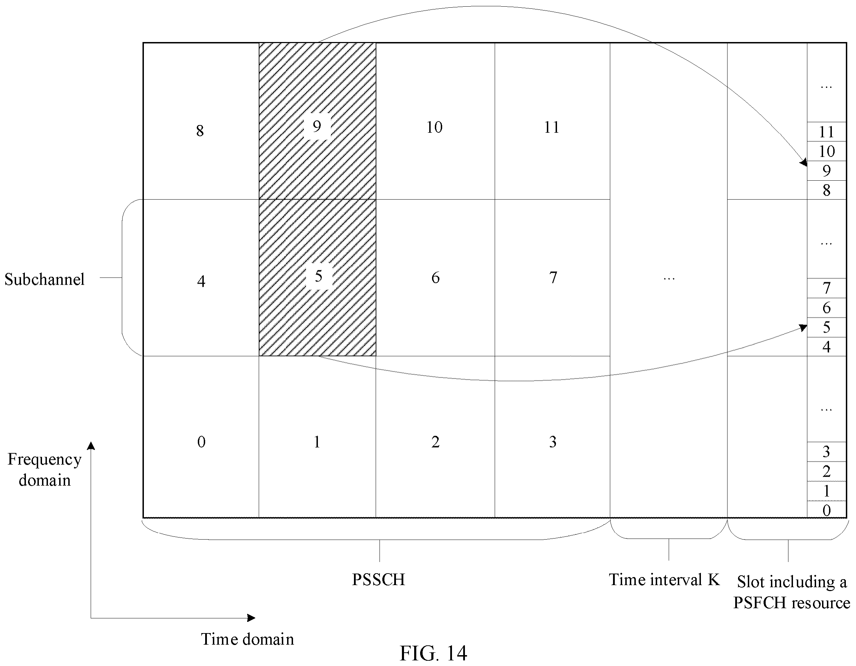

It should be noted that when transmission of one PSSCH occupies a plurality of subchannels, a PRB that can be used by a receiving end of the PSSCH may be limited by configuring $N_{type}^{PSFCH}$ for the resource pool. For example, 1. $N_{type}^{PSFCH} = 1$ is configured for the resource pool, and the receiving end of the PSSCH can use only a PSFCH resource corresponding to the 1st subchannel, that is, $R_{PRB, CS}^{PSFCH} = M_{subch, slot}^{PSFCH} \cdot N_{CS}^{PSFCH}$. As shown in FIG. 14, when the PSSCH occupies two subchannels numbered 5 and 9 for data transmission, the receiving end of the PSSCH can use only a PSFCH resource numbered 5 for feedback. 2. $N_{type}^{PSFCH} = N_{subch}^{PSSCH}$ is configured for the resource pool, and the receiving end of the PSSCH may use PSFCH resources corresponding to all subchannels for feedback, that is, $R_{PRB, CS}^{PSFCH} = N_{subch}^{PSSCH} \cdot M_{subch, slot}^{PSFCH} \cdot N_{CS}^{PSFCH}$. As shown in FIG. 14, when the PSSCH occupies two subchannels numbered 5 and 9 for data transmission, PRBs used for feedback corresponding to the PSSCH are also 5 and 9 respectively. That is, the receiving end can perform feedback by using the PRBs used for feedback numbered 5 and 9.

The PSFCH may be generated based on a Zadoff-Chu (Zadoff-Chu, ZC) sequence with a low peak-to-average ratio, and occupies two consecutive orthogonal frequency division multiplexing (orthogonal frequency division multiplexing, OFDM) symbols in time domain and one PRB in frequency domain. For example, a basic sequence r(n), $0 \le n < M_{ZC}$ is generated based on a sequence length, phase rotation is performed on the basic sequence r(n), and a low peak-to-average ratio sequence that can be multiplexed is generated in the following manner:

$$r^{\alpha}(n) = r * e^{j\alpha n}, 0 \le n < M_{ZC} = 12.$$

That is, a plurality of terminals are supported in generating different distinguishable PSFCH sequences by using different $\alpha$, and the PSFCH sequences are code division multiplexed on one PRB for sending. Because the terminal needs to feed back ACK and NACK information, at least two sequences are allocated to one terminal, and correspond to different values of $\alpha$. A phase rotation value $\alpha$ may be determined according to the following formula:

$$\alpha_l = \frac{2\pi}{N_{sc}^{RB}} \left( \left( m_0 + m_{cs} + n_{cs}(n_{s,f}^{\mu}, l + l') \right) \bmod N_{sc}^{RB} \right).$$

$N_{sc}^{RB}$ represents a quantity of subcarriers in one PRB, and the value is defined as 12 in NR, $n_{s,f}^{\mu}$ represents a slot number (slot number) corresponding to a current subcarrier spacing $\mu$ in a radio frame, $l$ represents a number of an OFDM symbol in a PSFCH transmission slot, and $l = 0$ represents the 1st OFDM symbol of a current PSFCH transmission resource; and $l'$ represents a symbol index relative to the 1st OFDM symbol of the current PSFCH transmission resource. $m_0$ represents a phase of an ACK in a PSFCH feedback resource pair, and $m_{cs}$ represents a phase offset of a NACK sequence relative to the ACK sequence in the PSFCH feedback resource pair.

It should be noted that values of $m_{cs}$ are different in different scenarios. For example, when NR-V2X supports physical layer PSFCH feedback in unicast and multicast scenarios, for different service types, values of $m_{cs}$ may be determined based on the following Table 3 and Table 4.

Table 3

| HARQ-ACK value | 0 (NACK) | 1 (ACK) |
|---|---|---|
| Sequence cyclic shift | $m_{CS} = 0$ | $m_{CS} = 6$ |

Table 3 shows a mapping relationship between a HARQ-ACK information bit value and a PSFCH feedback sequence pair in a unicast scenario and a multicast 1 scenario.

Table 4

| HARQ-ACK value | 0 (NACK) | 1 (ACK) |
|---|---|---|
| Sequence cyclic shift | $m_{CS} = 0$ | N/A |

Table 4 shows a mapping relationship between a HARQ-ACK information bit value and a PSFCH sequence pair in the multicast 1 scenario.

In a scenario in which a plurality of receiving ends multiplex one PRB for feedback, the transmitting end may select a resource corresponding to the $(P_{ID} + M_{ID}) mod R_{PRB, CS}^{PSFCH}$ th PSFCH resource pair for PSFCH feedback. $P_{ID}$ represents a physical layer source address ID carried in control information. For multicast 2, $M_{ID}$ is an ID configured by a higher layer of each receiving-end user for current PSSCH information transfer; otherwise, $M_{ID} = 0$. $R_{PRB, CS}^{PSFCH}$ PSFCH resource pairs are first indexed in frequency domain and then indexed in code domain, and then all PSFCH sequences are sorted in ascending order. That is, an index of a PRB corresponding to a PSFCH feedback is $\left( (P_{ID} + M_{ID}) mod R_{PRB, CS}^{PSFCH} \right) mod \left( R_{PRB, CS}^{PSFCH} / (N_{CS}^{PSFCH} * N_{type}^{PSFCH}) \right)$, and a cyclic shift pair index (cyclic shift pair index) corresponding to the PSFCH feedback in the PRB is $\left\lfloor \left( (P_{ID} + M_{ID}) mod R_{PRB, CS}^{PSFCH} \right) / \left( R_{PRB, CS}^{PSFCH} / (N_{CS}^{PSFCH} * N_{type}^{PSFCH}) \right) \right\rfloor$. In addition, Table 5 is used to determine and generate $m_0$ of the PSFCH feedback sequence.

Table 5

| $N_{CS}^{PSFCH}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

New radio (new radio, NR) Uu focuses on flexible physical channel and signal design, and a channel state information reference signal (channel-state-information reference signal, CSI-RS) has a very high degree of configuration freedom. In a physical downlink shared channel (physical downlink shared channel, PDSCH), all of a time domain location, a frequency domain location, a bandwidth, a period, and the like of a CSI-RS may be configured, and different configuration methods correspond to different CSI-RS resources. To implement transmit beam training, a network device allocates $K_S$ CSI-RS resources to $K_S$ transmit beams, and then sends the CSI-RS resources in a beam sweeping manner. In these CSI-RS resources, a maximum quantity of CSI-RS ports is 2, but other resource mapping information is uncertain, and needs to be configured by the network device and indicated to the terminal by using RRC signaling. In addition, the network device sends a CSI-RS resource only in a single beam direction at a moment.

The following describes an NR Uu downlink beam training procedure.

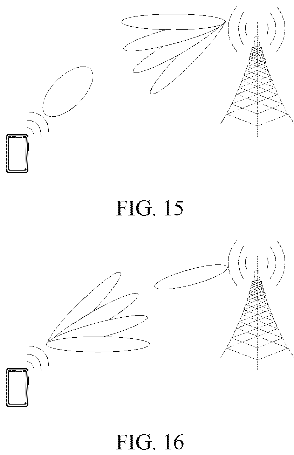

P1: Coarse alignment: The network device performs SSB beam sweeping, and the terminal performs wide beam sweeping. As shown in FIG. 15, the UE first receives, by using a (wide) beam, SSB beams sent by the network device. The network device changes directions of the SSB beams at different moments, the UE measures received strength in different directions, and the network device can determine an optimal SSB beam in this case.

The following separately describes, based on two states, a process in which the network device determines the optimal SSB beam.

1. In an idle state initial access phase, the terminal includes SSB index information of the optimal SSB beam in a random access RA preamble and feeds back the SSB index information of the optimal SSB beam to the network device, and the network device determines an SSB beam for sending a downlink signal. When receiving an uplink signal, the network device may directly reuse the beam.

2. In a connected state data transmission phase, the terminal feeds back an SSB measurement result to the network device by using a measurement report, and the network device determines an SSB beam for sending a downlink signal. When receiving an uplink signal, the network device may directly reuse the beam.

The following describes a process of determining a wide beam for receiving a downlink signal on a terminal side. When receiving a signal, the UE receives the signal in a beam sweeping manner based on an SSB time-frequency resource location notified in a system message (the idle mode initial access phase) or an RRC reconfiguration message (the connected mode data transmission phase). In this way, the wide beam used by the UE to receive the downlink signal can be determined. When sending an uplink signal, the terminal may directly reuse the beam.

Because there is a correspondence between an SSB index and a PRACH channel, the network device performs receiving on a corresponding PRACH channel. When the network device changes transmit beams on different SSB indexes, the terminal can obtain optimal beam information by measuring RSRP, and then perform feedback on a corresponding PRACH time-frequency resource. The network device can obtain, based on the PRACH channel, the optimal beam information reported by the UE.

P2: Fine tuning by the network device: The network device performs CSI-RS for BM beam sweeping.

For example, the network device performs sweeping again by using a narrower CSI-RS for BM beam near the optimal SSB beam (the network device may map a CSI-RS for BM beam to the optimal SSB beam by using a beam ID). The terminal feeds back a CSI-RS for BM measurement result to the network device by using a measurement report, and the network device determines a CSI-RS for BM beam for sending a downlink signal. When receiving an uplink signal, the network device may directly reuse the beam.

P3. Fine tuning by the terminal: The terminal performs narrow beam sweeping. As shown in FIG. 16, the CSI-RS for BM beam of the network device is fixed. When receiving a signal, the terminal receives the signal in the beam sweeping manner based on a CSI-RS for BM time-frequency resource location notified in an RRC configuration message of the network device, to determine a narrow beam used by the terminal to receive a downlink signal. When sending an uplink signal, the terminal may directly reuse the beam.

SCI in an NR SL system is classified into first-stage SCI and second-stage SCI. A physical sidelink control channel (physical sidelink control channel, PSCCH) carries the first-stage SCI, and the first-stage SCI is used to schedule the second-stage SCI and a PSSCH. Because the SL is a distributed system, all terminals can decode the second-stage SCI and the PSSCH only after correctly decoding the first-stage SCI. However, to reduce complexity of blind detection (blind decoding) performed by the terminal on the PSCCH, a currently defined resource location of the PSCCH is fixed, and carried first-stage SCI format information is also unique. That is, the terminal neither needs to blindly detect a time-frequency resource location of the PSCCH, nor needs to blindly detect SCI in different formats, and only needs to detect whether there is first-stage SCI at a fixed PSCCH time-frequency resource location. The PSCCH may exist in each subchannel in each slot. That is, a time domain start location of one PSCCH is the $2^{nd}$ symbol used for SL transmission in each slot, a length is 2 or 3 symbols (determined by resource pool configuration information), a frequency domain location is a smallest PRB index of each subchannel, and a length is at least 10 PRBs (determined by the resource pool configuration information) but does not exceed a size of the subchannel.

The first-stage SCI may reserve a time-frequency resource. For example, a Frequency resource assignment field and a Time resource assignment field in the first-stage SCI respectively indicate a frequency domain resource and a time domain resource for transmitting the PSSCH, and a Resource reservation period field indicates to periodically reserve a resource for transmitting a PSSCH. A value of the Resource reservation period field is configured, preconfigured, or predefined by the network device, for example, is indicated by first RRC signaling, and sl-ResourceReservePeriod1 may be determined based on the first RRC signaling.

In a sidelink system, a transmission resource of a transmitting end in a user self-selection resource mode (mode 2) does not depend on the network device. The transmitting end may select, in a resource selection window based on a result of sensing in a sensing window of the transmitting end, a transmission resource for communication.

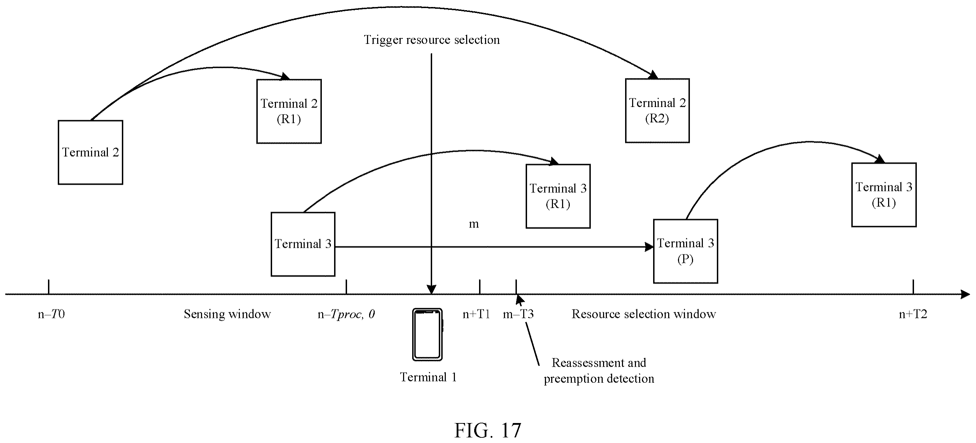

The following describes a resource selection procedure of the transmitting end with reference to FIG. 17 by using an example in which the transmitting end triggers resource selection in a slot n.

Step 1: Determine a candidate resource $R_{x,y}$ in a unit of one slot and $L_{subCH}$ consecutive subchannels, and a resource selection window $[n + T_1, n + T_2]$, where $0 \leq T_1 \leq T^{SL}_{proc,1}$, $T^{SL}_{proc,1}$ is determined according to Table 6, $\mu_{SL}$ is a configured subcarrier spacing, and selection of $T_1$ is based on implementation. If $T_{2min}$ ($T_{2min}$ is configured by a higher layer) is less than a remaining packet delay budget (packet delay budget, PDB), $T_{2min} \leq T_2 \leq PDB$. Selection of $T_2$ is based on implementation; otherwise, $T_2$ is less than or equal to the PDB.

Table 6

| $\mu_{SL}$ | $T^{SL}_{proc,1}$ [Slot] |
|---|---|
| 0 | 3 |
| 1 | 5 |
| 2 | 9 |
| 3 | 17 |

Step 2: Determine a sensing window $\left[n - T_0, n - T^{SL}_{proc,0}\right)$, where $T_0$ is configured by using a higher layer parameter, and $T^{SL}_{proc,0}$ is determined according to Table 7.

Table 7

| $\mu_{SL}$ | $T^{SL}_{proc,0}$ [Slot] |
|---|---|
| 0 | 1 |
| 1 | 1 |
| 2 | 2 |
| 3 | 4 |

Step 3: Determine a reference signal received power (reference signal received power, RSRP) threshold $Th(p_i, p_j)$. The RSRP threshold and *prioTX* of to-be-sent data are related to a priority (*prioRX*) indicated by received sidelink control information (sidelink control information, SCI). $Th(p_i, p_j)$ is specifically the *(prioRX+(prioTX-1)\*8)*th threshold in the RSRP threshold set configured for the resource pool.

Step 4: Initialize an available resource set SA to include all time-frequency resources in the resource selection window.

Step 5: Exclude the following time-frequency resources from SA: slots reserved for all periodic resources configured in a resource pool corresponding to a slot (a sending slot) that is not sensed in the sensing window.

For example, if the time-frequency resources excluded from SA are less than T% of all resources in the resource selection window, initialization in step 4 is performed again, step 5 is skipped, and subsequent steps are performed.

Step 6: Continue to exclude a time-frequency resource from SA: Received first-stage SCI is successfully decoded, a result of RSRP measurement performed by using a physical layer sidelink shared channel (physical sidelink shared channel, PSSCH) DMRS of a time-frequency resource reserved by the received first-stage SCI is higher than the RSRP threshold determined in step 3, and the time-frequency resource reserved by the received first-stage SCI is within the resource selection window; including a retransmission resource indicated by the first-stage SCI and a periodically reserved resource.

Step 7: If remaining resources in SA are less than T% of all the resources in the resource selection window, where a value of T% is configured by a resource pool and is related to *prioTX,* the RSRP threshold determined in step 3 is increased (increased by 3 decibels each time), until remaining resources in SA are not less than T% of all the resources in the resource selection window, and step 4 continues to be performed.

In conclusion, in the scenarios shown in FIG. 1 and FIG. 2, to ensure quality of sidelink communication between the terminals, the terminals may determine an optimal communication direction between two communication parties through beam training. However, if a beam management procedure of NR Uu is reused in the sidelink system, when beam training is performed by using an S-SSB, a plurality of terminals may simultaneously send different beams on a same time-frequency resource. Consequently, a sending conflict occurs between the terminals, and beam training is affected.

In view of this, an embodiment of this application provides a communication method. The terminal separately sends different S-SSBs on the N first time-frequency resources located in the resource pool, and based on received feedback information that indicates the S-SSBs, to implement beam training in the sidelink system. Because the time-frequency resource used to send the S-SSB is located in the resource pool, the method can effectively avoid a case in which a plurality of terminals send S-SSBs on a same time-frequency resource, to avoid a sending conflict between the terminals. In this way, beam training in the sidelink system can be implemented.

Before the method provided in embodiments of this application is described, the following descriptions are first provided.

First, in the following embodiments, the terms and abbreviations such as resource and SCI are all examples provided for ease of description, and should not be construed as any limitation on this application. This application does not exclude a possibility of another term that can implement a same or similar function and that has been defined or will be defined in the future.

Second, "first", "second", and various numeric numbers in the following embodiments are merely used for differentiation for ease of description, and are not intended to limit the scope of embodiments of this application, for example, differentiation between different time-frequency resources, and differentiation between different information. It should be noted that ordinal numbers such as "first" and "second" used in embodiments of this application are used to distinguish between a plurality of objects, but are not used to limit sequences, time sequences, priorities, or importance of the plurality of objects.

Third, "at least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one (piece) of a, b, and c may represent a, b, c, a and b, a and c, b and c, or a, b, and c, where a, b, and c may be singular or plural.

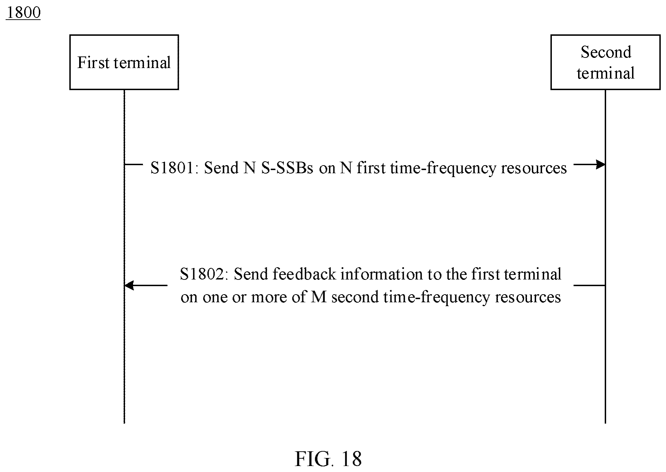

The following describes in detail the communication method provided in embodiments of this application with reference to FIG. 18 to FIG. 28. The method may be applied to the communication scenarios shown in FIG. 1 and FIG. 2, but embodiments of this application are not limited thereto.

In a flowchart shown in FIG. 18, the method is shown from a perspective of interaction between a first terminal and a second terminal. However, an execution body of the method is not limited in this application. For example, the first terminal in FIG. 18 may also be a chip, a chip system, or a processor that supports the first terminal in implementing the method, or may be a logical module or software that can implement all or some functions of the first terminal. The second terminal in FIG. 18 may also be a chip, a chip system, or a processor that supports the second terminal in implementing the method, or may be a logical module or software that can implement all or some functions of the second terminal.

FIG. 18 is a schematic flowchart of a communication method 1800 according to an embodiment of this application. As shown in FIG. 18, the method 1800 may include S1801 and S1802. The following describes in detail the steps shown in FIG. 18.

S1801: The first terminal sends N S-SSBs on N first time-frequency resources. Correspondingly, the second terminal receives M S-SSBs on M first time-frequency resources.

The N (or M) first time-frequency resources are located within a resource pool, N is an integer greater than 1, M is an integer greater than 1, and N is greater than or equal to M.

It should be understood that M=N indicates that the second terminal receives all the S-SSBs sent by the first terminal on the N first time-frequency resources; and M<N indicates that the second terminal receives some of the S-SSBs sent by the first terminal on the N first time-frequency resources.

For example, the N S-SSBs may be sent by the first terminal by using different beams. That is, each S-SSB corresponds to one beam, and S-SSBs sent on different first time-frequency resources use different beams. Different beams may be understood as different directions for sending S-SSBs, different spatial domain parameters, different beamforming weights, different widths, and the like.

In this embodiment of this application, a first time-frequency resource occupies one slot in time domain, and occupies at least one channel in frequency domain. That is, a time unit of the first time-frequency resource in this embodiment of this application is a slot.

S1802: The second terminal sends feedback information to the first terminal on one or more of M second time-frequency resources. Correspondingly, the first terminal receives the feedback information from the second terminal on one or more of N second time-frequency resources.

The feedback information indicates measurement results of one or more S-SSBs in the M S-SSBs, and the M (or N) second time-frequency resources are located in the resource pool.

In this application, the second terminal receives the S-SSBs on the M first time-frequency resources. Therefore, the second terminal may send the feedback information to the first terminal on all or some of the M second time-frequency resources corresponding to the M first time-frequency resources. The first terminal sends the N S-SSBs, and therefore, the first terminal receives, on the N second time-frequency resources, the feedback information corresponding to the N S-SSBs. However, it should be noted that when the received feedback information indicates that received strength of the S-SSB is the largest, the first terminal may not continue to receive the feedback information on the second time-frequency resources.

It should be further understood that a second time-frequency resource occupies two symbols in time domain, and occupies at least one PRB in frequency domain. That is, a time unit of the second time-frequency resource is a symbol.

In this embodiment of this application, the first terminal separately sends different S-SSBs on the N first time-frequency resources in the resource pool, and beam training in a sidelink system is implemented based on the feedback information that is sent by the second terminal on the N second time-frequency resources and that indicates the S-SSBs. Because the time-frequency resource used to send the S-SSB is located in the resource pool, the method provided in this embodiment of this application can effectively avoid a case in which a plurality of terminals send S-SSBs on a same time-frequency resource, to avoid a sending conflict between the terminals. In this way, beam training in the sidelink system can be implemented.

Optionally, before S1802, the method 1800 further includes: The second terminal measures the at least one received S-SSB, to obtain a measurement result of the at least one S-SSB.

It should be understood that a quantity of S-SSBs received by the second terminal may be the same as or different from a quantity of S-SSBs sent by the first terminal.

For example, that the second terminal measures the S-SSB includes measuring signal quality of the S-SSB and measuring received strength of the S-SSB. That is, the feedback information includes the measurement result of the S-SSB, and the measurement result includes RSRP, a received signal strength indicator (received signal strength indication, RSRI), and the like of the S-SSB. For example, the RSRP of the S-SSB is obtained through measurement based on an SSS or a PSS, or is obtained through measurement based on a PSBCH DMRS.

In an optional embodiment, feedback information received on the $i^{th}$ second time-frequency resource in the N second time-frequency resources is feedback information corresponding to the $i^{th}$ S-SSB in the N S-SSBs, and the $i^{th}$ S-SSB is an S-SSB sent on the $i^{th}$ first time-frequency resource in the N first time-frequency resources. A value of i is any integer from 1 to N. Similarly, feedback information sent on the $m^{th}$ second time-frequency resource in the M second time-frequency resources is feedback information corresponding to the $m^{th}$ S-SSB in the M S-SSBs, the $m^{th}$ S-SSB is an S-SSB received on the $m^{th}$ first time-frequency resource in the N first time-frequency resources. A value of m is any integer from 1 to M.

It should be understood that the value of i is any integer from 1 to N, that is, i=1, 2, 3, ..., N, or the value of i is any integer in [1, N]. The value of m is any integer from 1 to M, that is, m=1, 2, 3, ..., or the value of m is any integer in [1, M].

For example, the first terminal sends the $i^{th}$ S-SSB on the $i^{th}$ first time-frequency resource in the N first time-frequency resources. The first terminal receives the feedback information on the $i^{th}$ second time-frequency resource in the N second time-frequency resources. The feedback information indicates the $i^{th}$ S-SSB.

In this embodiment of this application, sequence numbers of the N (or M) first time-frequency resources are determined based on a sequence of the N (or M) first time-frequency resources in time domain. For example, the $2^{nd}$ first time-frequency resource is located after the $1^{st}$ first time-frequency resource in time domain, the $3^{rd}$ first time-frequency resource is located after the $2^{nd}$ first time-frequency resource in time domain, and so on. The $N^{th}$ first time-frequency resource is located after the $(N-1)^{th}$ first time-frequency resource in time domain. However, it should be understood that when M≠N, the $1^{st}$ first time-frequency resource in the N first time-frequency resources and the $1^{st}$ first time-frequency resource in the M first time-frequency resources are not a same resource, and the $1^{st}$ first time-frequency resource in the M first time-frequency resources is located in the $1^{st}$ first time-frequency resource in the N first time-frequency resources in time domain, and may be any one of the $2^{nd}$, the $3^{rd}$, ..., or the $N^{th}$ first time-frequency resource in the N first time-frequency resources.

In this embodiment of this application, sequence numbers of the N (or M) second time-frequency resources are determined based on a sequence of the N (or M) second time-frequency resources in time domain. For example, the $2^{nd}$ second time-frequency resource is located after the $1^{st}$ second time-frequency resource in time domain, the $3^{rd}$ second time-frequency resource is located after the $2^{nd}$ second time-frequency resource in time domain, and so on. The $N^{th}$ second time-frequency resource is located after the $(N-1)^{th}$ second time-frequency resource in time domain. However, it should be understood that when M≠N, the $1^{st}$ second time-frequency resource in the N second time-frequency resources and the $1^{st}$ second time-frequency resource in the M second time-frequency resources are not a same resource.

The N first time-frequency resources and the N second time-frequency resources are distributed in the following two manners in time domain.

Manner 1: There is one second time-frequency resource between two adjacent first time-frequency resources in time domain.

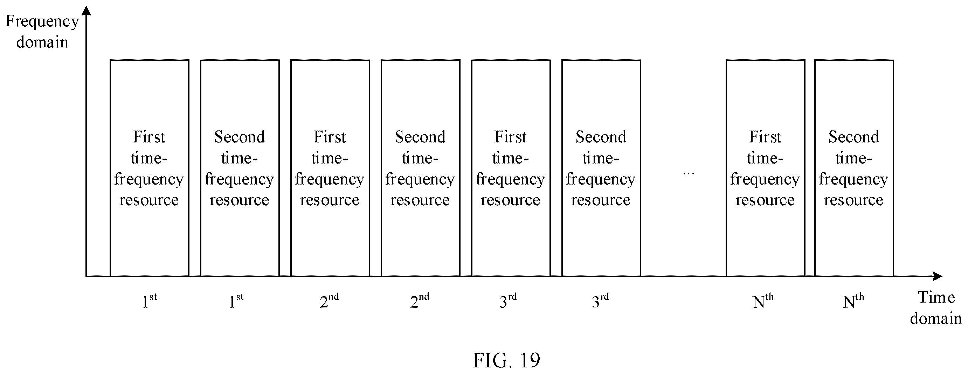

FIG. 19 is a diagram of a location relationship between a first time-frequency resource and a second time-frequency resource in time domain according to an embodiment of this application. As shown in FIG. 19, the first time-frequency resources and the second time-frequency resources are alternately distributed, only one second time-frequency resource is included between two adjacent first time-frequency resources, and a sequential location relationship between a first time-frequency resource and a second time-frequency resource with a same sequence number in time domain satisfies: The second time-frequency resource is located after the first time-frequency resource.

In an optional embodiment, each second time-frequency resource includes X1 resource elements, and the X1 resource elements correspond to X2 thresholds. Both X1 and X2 are positive integers, X1 is greater than or equal to X2, and the X2 thresholds may be preconfigured, predefined, or configured by a network device.

It should be understood that the X2 thresholds may also be referred to as X2 RSRP level strengths. For example, if X2=6, there are six level strengths: 1 decibel relative to one milliwatt (decibel relative to one milliwatt, dBm), 2 dBm, 3 dBm, 4 dBm, 5 dBm and 6 dBm. In other words, each second time-frequency resource includes at least six resource elements, which respectively correspond to the six level strengths. When X2=6, each second time-frequency resource includes at least six resource elements or an integer multiple of six resource elements, each resource element corresponds to one level strength, and a same level strength may correspond to one or more resource elements.

Optionally, the X2 thresholds may alternatively be X2 threshold intervals. For example, X2=5, and there are five intervals: [-9 dBm, 1 dBm], [1 dBm, 2 dBm], [2 dBm, 4 dBm], [4 dBm, 6 dBm], and [4 dBm, infinity].

It should be further understood that the quantity X1 of resource elements included in each second time-frequency resource is related to a frequency domain resource and a code domain resource that correspond to the second time-frequency resource. The frequency domain resource is a quantity of PRBs allocated to the first time-frequency resource that occupies one subchannel and one slot, and the code domain resource is a configured cyclic shift sequence pair.

For example, a quantity of frequency domain resources included in the second time-frequency resource may be determined with reference to Formula (1), and $M_{\text{subch, slot}}^{\text{PSFCH}}$ in Formula (1) represents a frequency domain resource included in the second time-frequency resource. For example, the second time-frequency resource includes $M_{\text{subch, slot}}^{\text{PSFCH}} = A$ PRBs, and $N_{\text{CS}}^{\text{PSFCH}} = B$ cyclic shift pairs are configured. In this case, the quantity X1 of resource elements included in the second time-frequency resource satisfies: X1=A*B*2. 2 indicates that each cyclic shift pair includes two orthogonal sequences.

It should be noted that, because an S-SSB sent by the first terminal may be simultaneously received by a plurality of terminals (for example, in a broadcast or multicast sending manner), the plurality of terminals all need to send feedback information on a same second time-frequency resource. That is, each second time-frequency resource is multiplexed by the plurality of terminals. When the second time-frequency resource includes a plurality of resource elements, a quantity of multiplexing terminals that can be supported by each second time-frequency resource may be determined based on X1 and X2. For example, a relationship between a quantity G of terminals that reuse one second time-frequency resource, the quantity X1 of resource elements, and X2 thresholds should satisfy: G=X1/X2. In this way, it can be ensured that each terminal corresponds to X2 resource elements, so that the first terminal can distinguish between a plurality of pieces of received feedback information.

In an optional embodiment, the method 1800 further includes: The second terminal determines a threshold corresponding to the measurement result from the X2 thresholds based on the measurement result.

For example, that the second terminal determines the threshold corresponding to the measurement result from the X2 thresholds includes: The second terminal may obtain a measurement value based on the measurement result, and the second terminal uses a threshold closest to the measurement value as the threshold corresponding to the measurement result.

For example, it is assumed that the X2 thresholds respectively correspond to { $V_1$, $V_2$, ... , $V_q$, ... , $V_{X2}$}, the measurement result is $V_{cal}$, a threshold $V_t$ corresponding to the measurement result satisfies: abs ($V_{cal} - V_t$) is minimized, and $V_{cal}$ is a linear measurement value or a value in dBm. The function abs () is an absolute value function.

It should be noted that, if there are X2 threshold intervals, after obtaining the measurement result, the second terminal only needs to determine a threshold interval to which a measurement value corresponding to the measurement result belongs.

For example, when each second time-frequency resource includes a plurality of resource elements, the network device may number the plurality of resource elements first in frequency domain and then in time domain. That is, each resource element corresponds to one index. In this case, an index (index) of a resource element corresponding to the $x$th threshold in the X2 thresholds satisfies:

$$index = (S_{\mathrm{ID}} + D_{ID} + x + delta) mod\ X1 \qquad (4)$$

*delta* is a preconfigured or predefined integer, or an integer configured by a network; $S_{ID}$ represents an identifier of the first terminal (a terminal that sends the S-SSB); and $D_{ID}$ represents an identifier of the second terminal (a terminal that receives the S-SSB). For example, a value of *delta* may be an integer such as 0, -1, 1, 2, or -2, or delta=t*X2, or delta=t*$D_{ID}$, and a value of t may be a value such as 0, -1, or 1. The $S_{ID}$ may be a physical layer ID of the first terminal, namely, an L1-ID, or the $S_{ID}$ is related to an S-SSB sequence ID, but may be used to identify the first terminal. $D_{ID}$ may be a physical layer ID of the second terminal, namely, an L1-ID, or $D_{ID}$ is related to an S-SSB sequence ID, but may be used to identify the second terminal. The ID is not limited in this application.

Optionally, a value of *delta* in Formula (4) may alternatively be determined based on $D_{ID}$.

For example, the X2 thresholds may be sorted based on values of the X2 thresholds. With reference to the foregoing example in which X2=6, 1 dBm may be referred to as the 1st threshold, 2 dBm may be referred to as a 2nd threshold, ..., and so on. 6 dBm may be referred to as the 6th threshold. Similarly, the X2 thresholds may be sorted based on values. With reference to the foregoing example of the threshold intervals, the 1st threshold interval is [-9 dBm, 1 dBm], the 2nd threshold interval is [1 dBm, 2 dBm], the 3rd threshold interval is [2 dBm, 4 dBm], the 4th threshold interval is [4 dBm, 6 dBm], and the 5th threshold interval is [4 dBm, infinity]. Correspondingly, an index (index) of a resource element corresponding to the $x$th threshold interval in the X2 threshold intervals may still be determined according to Formula (4).

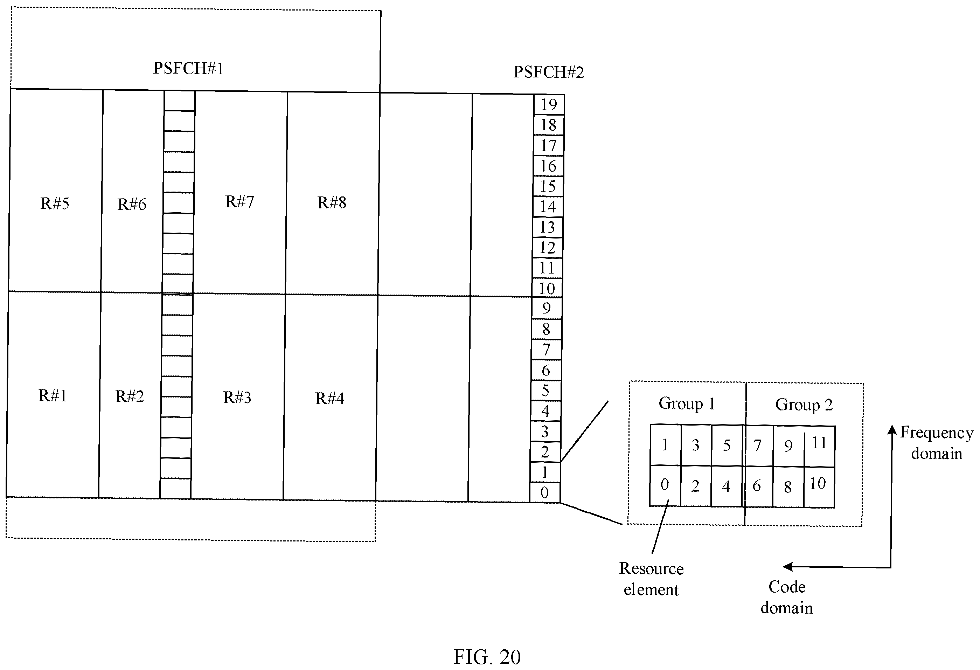

FIG. 20 shows a correspondence between first time-frequency resources and second time-frequency resources according to an embodiment of this application. As shown in FIG. 20, if a PSFCH configuration period is 4 and K=2, feedback resources corresponding to R#1 to R#8 are located on a PSFCH #2. If a bitmap indicates that a quantity of PRBs that can be used for feedback on the PSFCH #2 is 20, R#1 to R#8 each may correspond to two PRBs. R#1 to R#8 each occupy one slot in time domain, and occupy one subchannel in frequency domain. If R#1 is one first time-frequency resource (which may be referred to as the 1st first time-frequency resource), and PRBs corresponding to R#1 are a PRB 0 and a PRB 1, the PRB 0 and the PRB 1 may be referred to as the 1st second time-frequency resource. It should be understood that, for a quantity of PRBs corresponding to each first time-frequency resource and a corresponding PRB, refer to descriptions in the conventional technology. Details are not described herein.

As shown in FIG. 20, each second time-frequency unit includes two PRBs, and three groups of mutually orthogonal CSs are configured. In this case, each second time-frequency resource may include 12 resource elements (each resource element corresponds to one sequence). If a plurality of resource elements included in each second time-frequency unit are indexed in a frequency domain ascending order first and then in a code domain ascending order, index numbers in the second time-frequency resource are 0 to 11 (for example, numbers in FIG. 20). When X2=6, six resource elements may be divided into two groups (group). Numbers 0 to 5 belong to a group 1, and numbers 6 to 11 belong to a group 2.

As shown in FIG. 20, in one group, if RSRP strength is positively correlated with index numbers of resource elements, that is, a threshold corresponding to an index 0 is the largest, it indicates that the beam pair has best performance. If the first terminal sends an S-SSB on R#1, the second terminal and a third terminal located nearby simultaneously receive the S-SSB, RSRP strength received by the third terminal is 5 dBm, and RSRP strength received by the second terminal is 1 dBm. When delta is 0, $S_{ID}$ of the first terminal is 0, $D_{ID}$ of the second terminal is 0, and $D_{ID}$ of the third terminal is 1, it can be learned, according to Formula (4), that feedback resource indexes of the second terminal are 0 to 6, feedback is performed in the group 1, feedback indexes of the second terminal are 6 to 11, and feedback is performed in the group 2. If the six preset thresholds are respectively 1 dBm, 2 dBm, 3 dBm, 4 dBm, 5 dBm, and 6 dBm, the RSRP strength measured by the second terminal is fed back on a resource element with an index #1, and the RSRP strength measured by the third terminal is fed back on a resource element with an index #10.

In an optional embodiment, the second terminal sends one piece of feedback information on each of a plurality of second time-frequency resources in the M second time-frequency resources. Measurement results of S-SSBs indicated by the plurality of pieces of feedback information are greater than or equal to a threshold in the X2 thresholds. Alternatively, the second terminal sends M pieces of feedback information on the M second time-frequency resources, and the M pieces of feedback information indicate measurement results of the M S-SSBs.

It should be understood that the plurality of second time-frequency resources used by the second terminal to send the feedback information may be consecutive or inconsecutive. For example, the second terminal sequentially performs feedback on the 2nd second time-frequency resource, the 4th second time-frequency resource, and the 5th second time-frequency resource in the M second time-frequency resources.

Manner 2: The N second time-frequency resources are located after the N first time-frequency resources in time domain, and at least two of the N second time-frequency resources are located in a same slot. In other words, the 1st second time-frequency resource is located after the Nth first time-frequency resource in time domain.

It should be understood that the second time-frequency resource in Manner 2 occupies a plurality of PRBs in frequency domain.

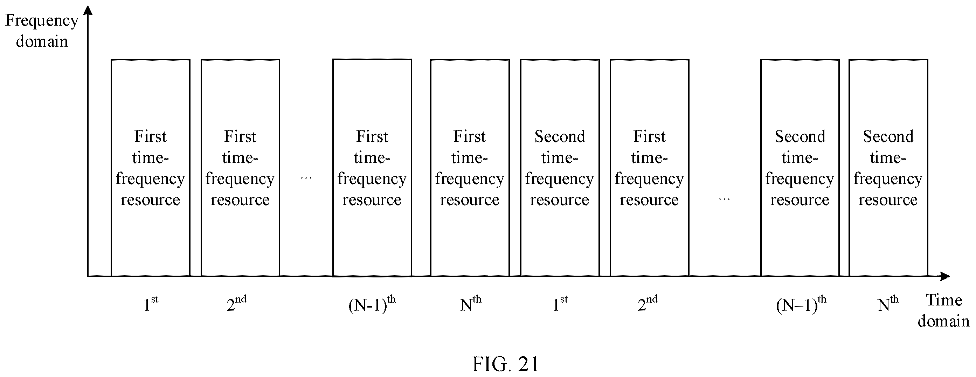

FIG. 21 shows another location relationship between a first time-frequency resource and a second time-frequency resource in time domain according to an embodiment of this application. As shown in FIG. 21, the N second time-frequency resources and the N first time-frequency resources are spaced apart, and a second time-frequency resource is not included between two adjacent first time-frequency resources.

That the at least two second time-frequency resources are located in a same slot may be understood as: The at least two adjacent second time-frequency resources are located in a same slot. For example, the $j^{th}$ second time-frequency resource and the $(j+1)^{th}$ second time-frequency resource are located in a same slot.

One feedback occasion (the feedback occasion is a resource block including one second time-frequency resource) requires two OFDM symbols (one for AGC training and the other for feedback). Therefore, one feedback occasion configured in this application occupies two symbols in time domain. One symbol is a symbol occupied by the second time-frequency resource in frequency domain. If switching of one beam requires X OFDM symbols (that is, two adjacent first time-frequency resources are separated by X OFDM symbols in time domain), one slot including L symbols may have P feedback occasions, and P satisfies: P*2+(P-1)*X≤Maximum integer of L-1. Therefore, the manner in which a plurality of second time-frequency resources are located in a same slot can reduce a waste of resources.

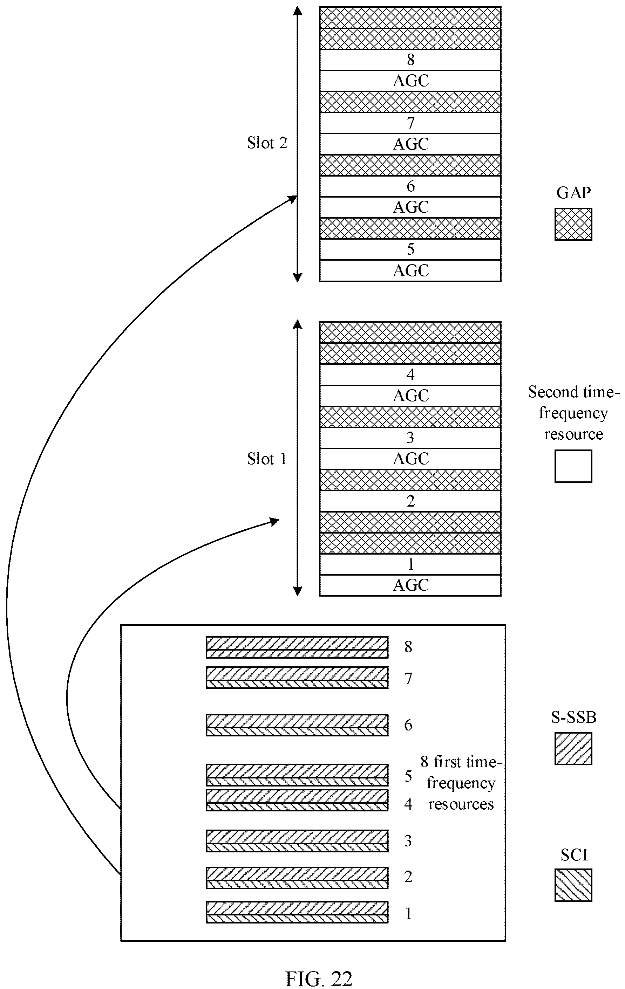

FIG. 22 is a diagram of a location relationship between the N second time-frequency resources according to an embodiment of this application. As shown in FIG. 22, eight first time-frequency resources correspond to eight subsequent feedback occasions, and each feedback occasion includes one second time-frequency resource. Assuming that beam switching requires one OFDM symbol, and one slot includes 13 symbols, P=4. In this case, the eight second time-frequency resources may be distributed in N/P=8/4=2 slots.

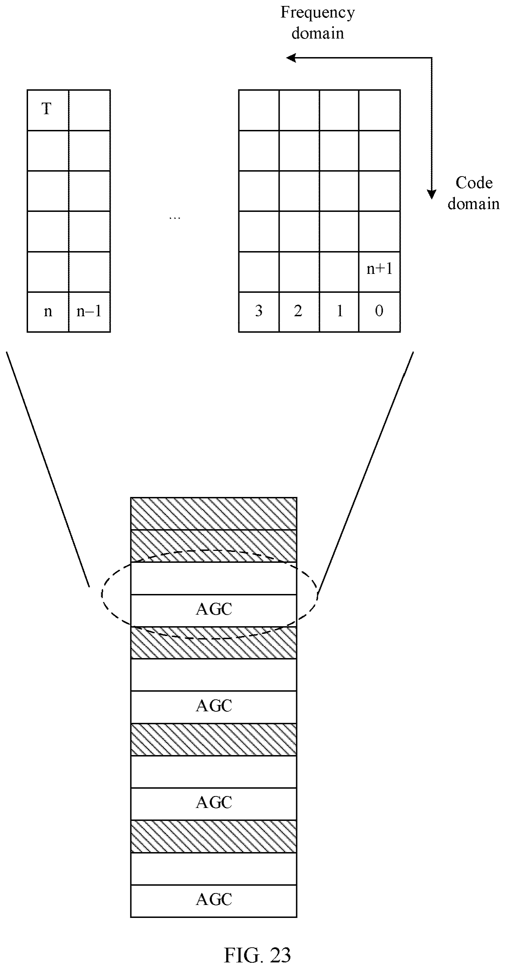

Similar to the second time-frequency resource in Manner 1, each second time-frequency resource in Manner 2 may also include a plurality of resource elements. As shown in FIG. 23, the network device may number the plurality of resource elements in a frequency domain ascending order first and then in a code domain ascending order. In this case, indexes in one second time-frequency resource are 0 to T. For descriptions of the resource element, refer to related descriptions in Manner 1. Details are not described herein again. It should be understood that each second time-frequency resource may be multiplexed by as many terminals as a quantity of included resource elements. In this manner, for a frequency domain resource included in the second time-frequency resource, refer to Formula (1), where a meaning of $M_{subch,\,slot}^{PSFCH}$ is a frequency domain resource included in the second time-frequency resource, and a code domain resource is a configured cyclic shift sequence pair, and has a same meaning as a parameter $N_{CS}^{PSFCH}$. For example, if the second time-frequency resource includes $M_{subch,\,slot}^{PSFCH}=A$ PRBs, and a quantity of configured cyclic shift pairs is $N_{CS}^{PSFCH}=B$, the quantity X1 of resource elements included in the second time-frequency resource satisfies: X1=A*B*2. 2 indicates that each cyclic shift pair includes two orthogonal sequences.

In an optional embodiment, the received strength of the S-SSB indicated by the feedback information is greater than a first threshold, and the first threshold is predefined, preconfigured, or configured received strength. Alternatively, received strength of the S-SSB indicated by the feedback information is greater than received strength of another S-SSB. The another S-SSB is a remaining S-SSB other than the S-SSB indicated by the feedback information in the N (or M) S-SSBs.

For example, if the first terminal receives one piece of feedback information on one of the N second time-frequency resources, an S-SSB indicated by the feedback information has highest received strength, highest received energy, highest signal strength, or the like.

It should be understood that, because different S-SSBs correspond to different transmit beams, the first terminal may determine a target beam based on a plurality of pieces of received feedback information. The target beam is a beam corresponding to a largest beam measurement result in beam measurement results corresponding to the plurality of beams. Alternatively, the target beam is any beam in a candidate beam set, and a measurement result of a beam included in the candidate beam set is greater than the first threshold.

In an optional embodiment, the method 1800 further includes: The first terminal determines one S-SSB based on the plurality of pieces of feedback information, where received strength of the S-SSB is the largest.

Optionally, when receiving the plurality of S-SSBs, the second terminal may separately send one piece of feedback information on each of the second time-frequency resources corresponding to the plurality of S-SSBs, or when an obtained measurement result is greater than or equal to a threshold in the X2 thresholds, the second terminal feeds back feedback information of an S-SSB corresponding to the measurement result greater than the threshold.

It should be understood that, because the $i^{th}$ S-SSB is sent by using a beam i, the first terminal may determine the target beam based on the plurality of pieces of received feedback information. The target beam is a beam corresponding to a largest beam measurement result in beam measurement results corresponding to the plurality of beams. Alternatively, the target beam is any beam in a candidate beam set, and measurement results of beams included in the candidate beam set are greater than or equal to X1 thresholds.

Optionally, the N first time-frequency resources are located in a candidate resource, and the candidate resource may be agreed on in a protocol or configured by the network device. In this way, detection difficulty during initial sweeping by the first terminal can be reduced.

For example, the candidate resource may be a candidate resource in frequency domain.

It should be understood that, when a quantity of PRBs included in a subchannel of a candidate time-frequency resource is greater than a quantity of PRBs occupied by one S-SSB, the candidate time-frequency resource occupies one subchannel in frequency domain.

In an optional embodiment, the method 1800 further includes: The first terminal sends or receives N pieces of DCR information on N third time domain resources. The N third time domain resources are in one-to-one correspondence with the N first time-frequency resources, or the N third time domain resources are in one-to-one correspondence with the N second time-frequency resources.

A time unit of the third time domain resources is a slot. That is, the third time domain resources may occupy a plurality of slots in time domain.

For example, a DCR may be data carried on a PSSCH. The DRC is used to start a unicast layer-2 link establishment procedure.

In an optional embodiment, the $i^{th}$ first time-frequency resource and the $i^{th}$ third time domain resource are separated by first duration, or the $i^{th}$ second time-frequency resource and the $i^{th}$ third time domain resource are separated by second duration. The first duration and the second duration are preconfigured, predefined, or configured by a network.

In an optional embodiment, the $i^{th}$ S-SSB carries first indication information, and the first indication information indicates the $i^{th}$ third time domain resource.

In an optional embodiment, the method 1800 further includes: The first terminal sends N pieces of SCI on the N first time-frequency resources, where the $i^{th}$ piece of SCI in the N pieces of SCI indicates at least one fourth time-frequency resource, and the at least one fourth time-frequency resource is used to send an S-SSB.

It should be understood that one fourth time-frequency resource occupies one slot in time domain, and occupies at least one subchannel in frequency domain.

It should be further understood that the at least one fourth time-frequency resource is located after the N first time-frequency resources, and the S-SSB sent on the at least one fourth time-frequency resource is sent by using the beam i. In other words, a beam used for the $(K_1=i+N)^{th}$ the $(K_2=i+N*2)^{th}$, ..., and the $(K_k=i+N*k)^{th}$ S-SSBs (k represents a quantity of fourth time-frequency resources indicated by the $i^{th}$ piece of SCI) sent on the fourth time-frequency resource is the same as the beam used for sending the $i^{th}$ S-SSB.

The SCI in this embodiment of this application may be referred to as first-stage SCI. It should be noted that the first-stage SCI may reserve a time-frequency resource of a PSSCH, and may further reserve a time-frequency resource of an S-SSB. Therefore, the first-stage SCI may indicate, by using indication information, whether a reserved resource is the time-frequency resource of the PSSCH or the time-frequency resource of the S-SSB. For a manner of reserving the time-frequency resource of the S-SSB by the first-stage SCI, refer to related descriptions of reserving the time-frequency resource of the PSSCH by using the first-stage SCI in the conventional technology. Details are not described herein.

For example, the $i^{th}$ piece of SCI indicates a priority of the S-SSB sent on the at least one fourth time-frequency resource. In this way, another terminal cannot preempt the resource for data transmission.

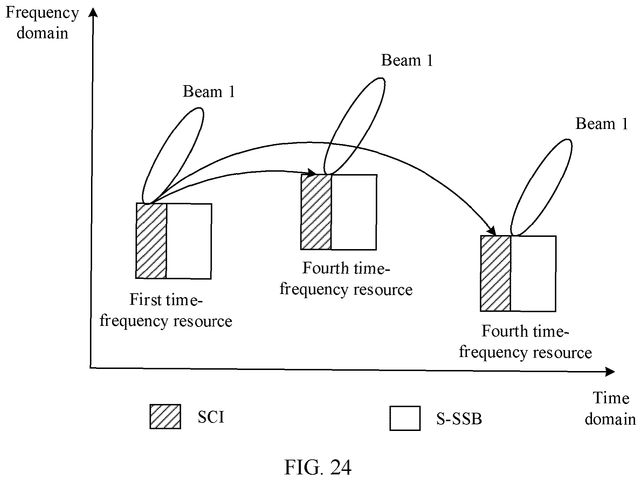

FIG. 24 shows a manner of indicating a fourth time-frequency resource by SCI according to an embodiment of this application. As shown in FIG. 24, a beam of the 1st S-SSB sent on the 1st first time-frequency resource is a beam 1, and the 1st sent SCI indicates two fourth time-frequency resources, and indicates that a beam used by the S-SSB sent on the two fourth time-frequency resources is the beam 1.

In an optional embodiment, the N first time-frequency resources are located in a first window, and the first window may be agreed on in a protocol, or may be configured by the network device. The first window may be understood as duration. For example, the first window is 100 milliseconds, or the first window uses a slot as a basic unit to represent a quantity of included slot units.

It may be understood that, because the N first time-frequency resources are located in the first window, the N S-SSBs and the N pieces of SCI are also located in the first window.

For example, when there are a plurality of at least one fourth time-frequency resource, a time interval between two adjacent fourth time-frequency resources in time domain is greater than or equal to the first window, and a time interval between the 1st fourth time-frequency resource indicated by the $i^{th}$ piece of SCI and the $i^{th}$ first time-frequency resource is greater than or equal to the first window.

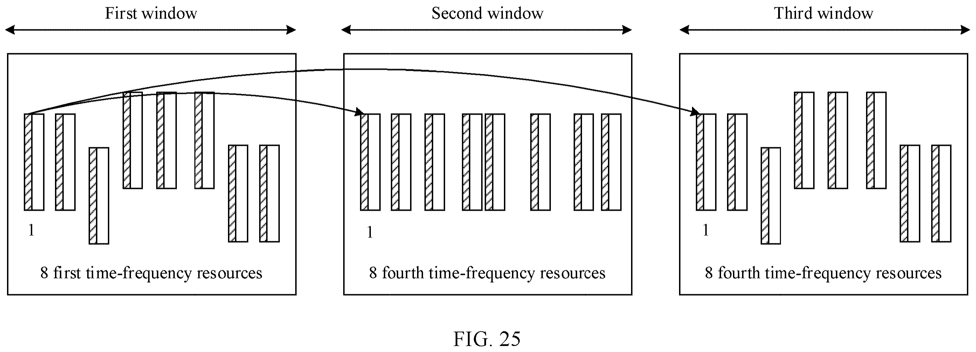

FIG. 25 shows a location relationship between fourth time-frequency resources and the first window according to an embodiment of this application. As shown in FIG. 25, the first window, a second window, and a third window have same duration. Eight first time-frequency resources are located in the first window, one piece of SCI is sent on each first time-frequency resource, and each piece of SCI indicates two fourth time-frequency resources that are respectively located in the second window and the third window. For example, SCI on the 1st first time-frequency resource in the first window

reserves the 1st fourth time-frequency resource in the second window and the 1st fourth time-frequency resource in the third window. An interval between time-frequency resources with a same sequence number in two adjacent windows in time domain is greater than or equal to the first window. It should be understood that SCI may also be sent on the fourth time-frequency resource, and the SCI may also indicate at least one fourth time-frequency resource. For example, SCI sent on the 1st fourth time-frequency resource in the second window may indicate the 1st fourth time-frequency resource in the third window.

For example, when the first window is configured, the $i^{th}$ S-SSB may further carry first information, and the first information indicates duration between the $i^{th}$ first time-frequency resource and an end moment of the first window in time domain. The method can effectively avoid a case in which the second terminal repeatedly sweeps a same beam or misses sweeping another beam because the first beam information is not received and a start point or an end point of the first window is unknown due to half-duplex or a poor received signal.

In an optional embodiment, the $i^{th}$ piece of SCI further indicates the $i^{th}$ second time-frequency resource.

Optionally, the $i^{th}$ piece of SCI further indicates first indication information.

It should be understood that the $i^{th}$ second time-frequency resource indicated by the SCI may be at a resource pool level, or may be at a subchannel level. The $i^{th}$ second time-frequency resource may be represented by using a newly added bitmap. The bitmap indicates a relationship between S-SSB beam strengths. Based on a frequency domain feedback granularity, a length of the bitmap is equal to a quantity of PRBs included in the feedback granularity.

In this application, the SCI indicates the second time-frequency resource, so that a feedback conflict caused because the S-SSB and the PSSCH share a same feedback resource can be avoided. In addition, in this centralized manner of feeding back the feedback information of the plurality of S-SSBs, a correspondence between different thresholds and resource elements does not need to be set. Therefore, a constraint between a quantity of terminals that are supported in multiplexing and a level may not be considered. In this way, more resources are used for feedback, to support multiplexing of more terminals.

When the first terminal and the second terminal in this application perform beam training in the S-SSB sending manner shown in FIG. 25, the second terminal may receive S-SSBs from the first terminal in different windows by using different beams. After the plurality of windows, the two terminals may determine an optimal beam used for communication between the two terminals.

In an optional embodiment, the first time-frequency resource includes, in time domain, a symbol used to transmit an AGC, a symbol used to transmit an S-SSB, the last symbol that is a GAP symbol, and a symbol used to transmit a PSCCH.

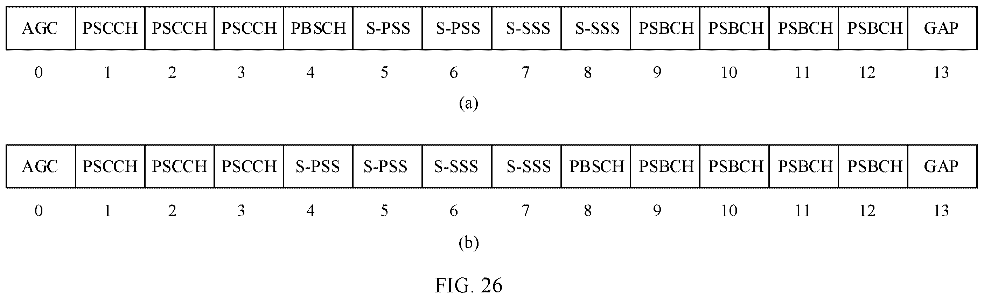

FIG. 26 is a diagram of a slot structure of an S-SSB according to an embodiment of this application. As shown in (a) and (b) in FIG. 26, the 1st symbol is an AGC symbol, the last symbol is a GAP symbol, a PSCCH occupies three symbols, and an S-SSB occupies nine symbols. An S-SSS occupies two symbols, an S-PSS occupies two symbols, and a PSBCH occupies five symbols. However, in (a) in FIG. 26, PBCH symbols are consecutive, and an AGC symbol may be a copy of a PSCCH symbol numbered 1, or may be a copy of a PBSCH symbol numbered 4. In (b) in FIG. 26, PBCH symbols are inconsecutive, and an AGC symbol may be a copy of a PSCCH symbol numbered 1, or may be a copy of a PBSCH symbol numbered 8.

It should be understood that resources in a resource pool are allocated at a granularity of a subchannel, and one subchannel may include 10, 12, 15, 20, 25, 50, 75, or 100 PRBs. In some embodiments, a quantity of PRBs included in a PSCCH frequency domain resource may be any one of 10, 12, 15, 20, and 25, and a quantity of PRBs occupied by a PSCCH cannot exceed a quantity of PRBs included in the subchannel.

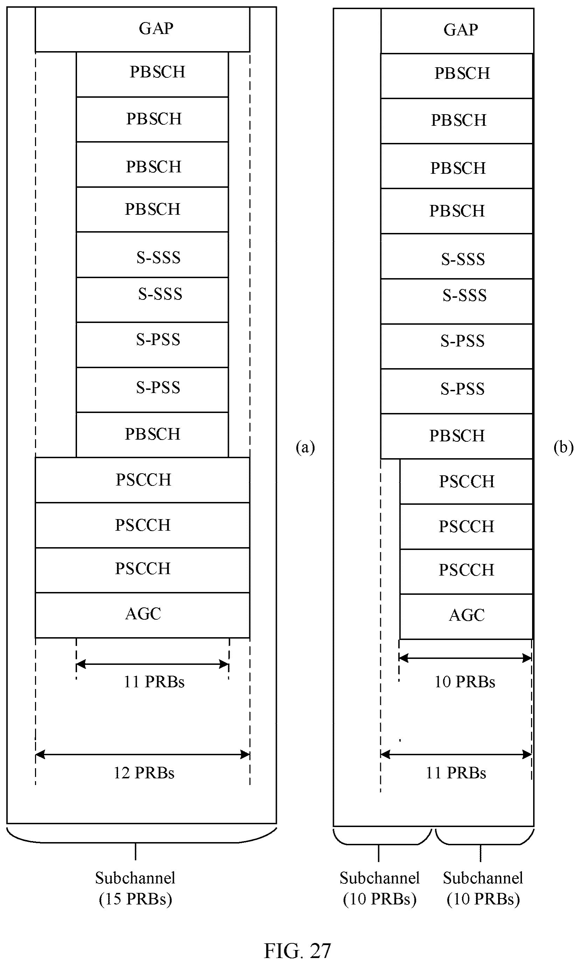

For example, when quantities of PRBs occupied by the PSCCH and the S-SSB are determined in the resource pool, another time-frequency resource that is on the subchannel and that is not mapped is set to empty, that is, is not used for data mapping. With reference to FIG. 27, the following describes a resource occupied by an S-SSB in frequency domain.

As shown in (a) in FIG. 27, one subchannel includes 15 PRBs, a PSCCH occupies 12 PRBs, and a PBSCH occupies 11 PRBs. In this case, a slot structure does not occupy all 15 PRBs in the slot, and other time-frequency resource locations that are not mapped are set to empty. However, during AGC, because the 1st symbol is a copy of the 2nd symbol, the second terminal adjusts received power based on the 1st AGC symbol, to ensure that transmit power of a synchronization signal and a PBSCH block is the same as transmit power of a PSSCH.

As shown in (b) in FIG. 27, one subchannel includes 10 PRBs, a PSCCH occupies 10 PRBs, a PBSCH occupies 11 PRBs, and an S-SSB occupies two subchannels. However, the PSSCH and the PSBCH cannot occupy all PRBs. However, during AGC, because the 1st symbol is a copy of the 2nd symbol, the second terminal adjusts the received power based on the 1st AGC symbol, to ensure that transmit power of a synchronization signal and a PBSCH block is the same as transmit power of the PSSCH.

For example, when a quantity of PRBs occupied by the PSCCH and the S-SSB is determined in the resource pool, bit padding, rate matching on the PBCH, or sending a MAC CE is performed on another time-frequency resource that is on the subchannel and that is not mapped.

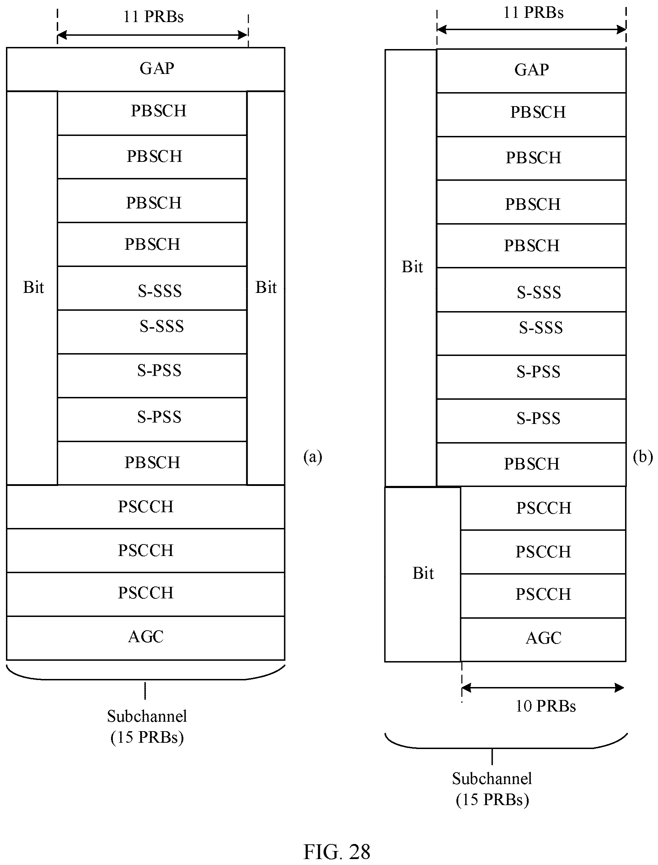

With reference to FIG. 28, the following describes a resource occupied by an S-SSB in frequency domain.

As shown in (a) in FIG. 28, one subchannel includes 15 PRBs, a PSCCH occupies 15 PRBs, a PBCH occupies 11 PRBs, and a synchronization sequence and a PBCH block occupy 15 PRB resources on the subchannel together. Bit padding, sending of a medium access control (medium access control, MAC) control element (control element, CE) (MAC CE for short), or rate matching on a PBSCH block is performed at another location to ensure that another time-frequency resource location is not empty.

As shown in (b) in FIG. 28, one subchannel includes 15 PRBs, a PSCCH occupies 10 PRBs, a PBCH occupies 11 PRBs, and in this case, a PSCCH, a synchronization sequence, and a PBCH block occupy 15 PRB resources on the subchannel together. Bit padding, sending of a MAC CE, or rate matching on a PBCH block is performed at another location to ensure that another time-frequency resource location is not empty.

It should be understood that sequence numbers of the foregoing processes do not mean execution sequences. The execution sequences of the processes should be determined based on functions and internal logic of the processes, and should not be construed as any limitation on the implementation processes of embodiments of this application.

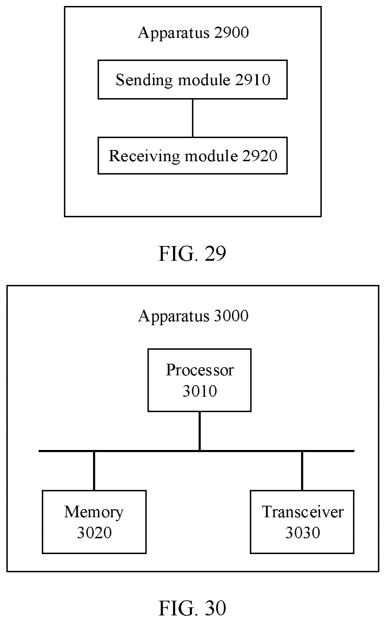

The foregoing describes in detail the methods in embodiments of this application with reference to FIG. 1 to FIG. 28. The following describes in detail the communication apparatuses in embodiments of this application with reference to FIG. 29 and FIG. 30.

FIG. 29 shows a communication apparatus 2900 according to an embodiment of this application. As shown in FIG. 29, the communication apparatus 2900 includes a sending module 2910 and a receiving module 2920.

In a possible implementation, the communication apparatus 2900 is the first terminal or a chip of the first terminal.

For example, the sending module 2910 is configured to send N S-SSBs on N first time-frequency resources, where the N first time-frequency resources are located within a resource pool, and N is an integer greater than 1. The receiving module 2920 is configured to receive feedback information from a second terminal on one or more of N second time-frequency resources, where the feedback information indicates measurement results of one or more S-SSBs in the N S-SSBs, and the N second time-frequency resources are located in the resource pool.

Optionally, feedback information corresponding to the $i^{th}$ S-SSB in the N S-SSBs is received on the $i^{th}$ second time-frequency resource in the N second time-frequency resources, the $i^{th}$ S-SSB is an S-SSB sent on the $i^{th}$ first time-frequency resource in the N first time-frequency resources, and a value of i is any integer from 1 to N.

Optionally, there is one second time-frequency resource between two adjacent first time-frequency resources in time domain.

Optionally, the $i^{th}$ second time-frequency resource in the N second time-frequency resources is located after the $i^{th}$ first time-frequency resource in the N first time-frequency resources in time domain, there is no first time-frequency resource between the $i^{th}$ first time-frequency resource and the $i^{th}$ second time-frequency resource, and a value of i is any integer from 1 to N.

Optionally, each second time-frequency resource includes X1 resource elements, the X1 resource elements correspond to X2 thresholds, X1 is an integer greater than or equal to X2, and X2 is an integer greater than or equal to 1.

Optionally, an index index of a resource element corresponding to the $x^{th}$ threshold in the X2 thresholds satisfies:

$$\text{index} = (S_{\text{ID}} + D_{ID} + x + delta) \bmod X1,$$

where
*delta* is a preconfigured or predefined integer, $S_{\text{ID}}$ is an identifier of the first terminal, and $D_{\text{ID}}$ is an identifier of the second terminal.

Optionally, the N second time-frequency resources are located after the N first time-frequency resources in time domain.

Optionally, received strength of an S-SSB indicated by the feedback information is greater than a first threshold, and the first threshold is predefined, preconfigured, or configured received strength.

Optionally, the sending module 2910 is further configured to send DCRs on N third time domain resources, or the receiving module 2920 is further configured to send DCRs on N third time domain resources. The N third time domain resources are in one-to-one correspondence with the N first time-frequency resources, or the N third time domain resources are in one-to-one correspondence with the N second time-frequency resources.

Optionally, the sending module 2910 is further configured to send N pieces of SCI on the N first time-frequency resources, where the $i^{th}$ piece of SCI in the N pieces of SCI indicates at least one fourth time-frequency resource, and the at least one fourth time-frequency resource is used to send an S-SSB.

Optionally, the $i^{th}$ piece of SCI indicates a priority of the S-SSB sent on the at least one fourth time-frequency resource.

In an optional example, a person skilled in the art may understand that the communication apparatus 2900 may be specifically the first terminal in the foregoing embodiments. The communication apparatus 2900 may be configured to perform procedures and/or steps corresponding to the first terminal in the method 2900. To avoid repetition, details are not described herein again.

In another possible implementation, the communication apparatus 2900 is a second terminal or a chip of the second terminal.

For example, the receiving module 2920 is configured to receive M S-SSBs on M first time-frequency resources, where the M first time-frequency resources are located within a resource pool, and M is an integer greater than 1. The sending module 2910 is configured to send feedback information to a first terminal on one or more of M second time-frequency resources, where the feedback information indicates measurement results of one or more S-SSBs in the M S-SSBs, and the M second time-frequency resources are located in the resource pool.

Optionally, feedback information corresponding to the m$^{th}$ S-SSB in the M S-SSBs is sent on the m$^{th}$ second time-frequency resource in the M second time-frequency resources, the m$^{th}$ S-SSB is an S-SSB received on the m$^{th}$ first time-frequency resource in the N first time-frequency resources, and a value of m is any integer from 1 to M.

Optionally, the communication apparatus 2900 further includes a processing module, configured to measure the M S-SSBs to obtain measurement results of the M S-SSBs.

Optionally, there is one second time-frequency resource between two adjacent first time-frequency resources in time domain.

Optionally, the m$^{th}$ second time-frequency resource in the M second time-frequency resources is located after the m$^{th}$ first time-frequency resource in the M first time-frequency resources in time domain, and there is no first time-frequency resource between the m$^{th}$ first time-frequency resource and the m$^{th}$ second time-frequency resource.

Optionally, each second time-frequency resource includes X1 resource elements, the X1 resource elements correspond to X2 thresholds, X1 is an integer greater than or equal to X2, and X2 is an integer greater than or equal to 1.

Optionally, an index index of a resource element corresponding to the $x^{th}$ threshold in the X2 thresholds satisfies:

$$\text{index} = (S_{\text{ID}} + D_{ID} + x + delta) \bmod X1,$$

where

*delta* is a preconfigured or predefined integer, $S_{\text{ID}}$ is an identifier of the first terminal, and $D_{\text{ID}}$ is an identifier of the second terminal.

Optionally, the M second time-frequency resources are located after the M first time-frequency resources in time domain.

Optionally, received strength of an S-SSB indicated by the feedback information is greater than a first threshold, and the first threshold is predefined, preconfigured, or configured received strength.

Optionally, the sending module 2910 is further configured to send M DCRs on M third time domain resources, or the receiving module 2920 is further configured to: receive M DCRs on M third time domain resources. The M third time domain resources are in one-to-one correspondence with the M first time-frequency resources, or the M third time domain resources are in one-to-one correspondence with the M second time-frequency resources.

Optionally, the sending module 2910 is further configured to receive M pieces of SCI on the M first time-frequency resources, where the m$^{th}$ piece of SCI in the M pieces of SCI indicates at least one fourth time-frequency resource, and the at least one fourth time-frequency resource is used to receive an S-SSB.

Optionally, the m$^{th}$ piece of SCI indicates a priority of the S-SSB received on the at least one fourth time-frequency resource.

In an optional example, a person skilled in the art may understand that the communication apparatus 2900 may be specifically the computing board in the foregoing embodiments. The communication apparatus 2900 may be configured to perform procedures and/or steps corresponding to the computing board in the method 2900. To avoid repetition, details are not described herein again.

It should be understood that the communication apparatus 2900 herein is embodied in a form of a functional module. The term "module" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the communication apparatus 2900 may be specifically the first terminal or the first terminal in the foregoing embodiments, or functions of the first terminal or the second terminal in the foregoing embodiments may be integrated into the communication apparatus 2900, and the communication apparatus 2900 may be configured to perform procedures and/or steps corresponding to the first terminal or the second terminal in the foregoing method embodiments. To avoid repetition, details are not described herein again.

The communication apparatus 2900 has a function of implementing corresponding steps performed by the first terminal or the second terminal in the foregoing methods, and the foregoing function may be implemented by hardware, or may be implemented by hardware executing corresponding software. The hardware or the software includes one or more modules corresponding to the function.

FIG. 30 shows another communication apparatus 3000 according to an embodiment of this application. The communication apparatus 3000 includes a processor 3010, a memory 3020, and a transceiver 3030. The processor 3010, the memory 3020, and the transceiver 3030 are connected through an internal connection path. The memory 3020 is configured to store instructions. The processor 3010 is configured to execute the instructions stored in the memory 3020, so that the communication apparatus 3000 can perform the communication method provided in the foregoing method embodiments.

It should be understood that functions of the communication apparatus 2900 in the foregoing embodiment may be integrated into the communication apparatus 3000, and the communication apparatus 3000 may be configured to perform steps and/or procedures corresponding to the first terminal in the foregoing method embodiments, or the communication apparatus 3000 may be further configured to perform steps and/or procedures corresponding to the second terminal in the foregoing method embodiments. Optionally, the memory 3020 may include a read-only memory and a random access memory, and provide instructions and data for the processor. A part of the memory may further include a non-volatile random access memory. For example, the memory may further store information of a device type. The processor 3010 may be configured to execute the instructions stored in the memory, and when the processor executes the instructions, the processor 3010 may perform steps and/or procedures corresponding to the first terminal in the foregoing method embodiments, or the processor 3010 may perform steps and/or procedures corresponding to the second terminal in the foregoing method embodiments.

It should be understood that, in this embodiment of this application, the processor 3010 may be a central processing unit (central processing unit, CPU) or a baseband processor, or the processor 3010 may be another general-purpose processor, a digital signal processor (digital signal process, DSP), an ASIC, a field programmable gate array (field programmable gate array, FPGA), or another programmable logic device, a discrete gate or a transistor logic device, a discrete hardware component, or the like. The processor 3010 may be a microprocessor, or the processor 3010 may be any conventional processor or the like.

In an implementation process, steps in the foregoing method 3000 can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

This application further provides a computer-readable medium. The computer-readable medium stores a computer program, and when the computer program is executed by a computer, the method in any one of the foregoing method embodiments is implemented.

This application further provides a computer program product including instructions. When the computer program product is executed by a computer, the method in any one of the foregoing method embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, applied to a first terminal, wherein the method comprises:

    sending N sidelink synchronization signal blocks S-SSBs on N first time-frequency resources, wherein the N first time-frequency resources are located within a resource pool, and N is an integer greater than 1; and
    receiving feedback information from a second terminal on one or more of N second time-frequency resources, wherein the feedback information indicates measurement results of one or more S-SSBs in the N S-SSBs, and the N second time-frequency resources are located in the resource pool.

2. The method according to claim 1, wherein feedback information corresponding to the $i^{th}$ S-SSB in the N S-SSBs is received on the $i^{th}$ second time-frequency resource in the N second time-frequency resources, the $i^{th}$ S-SSB is an S-SSB sent on the $i^{th}$ first time-frequency resource in the N first time-frequency resources, and a value of i is any integer from 1 to N.

3. The method according to claim 1 or 2, wherein there is one second time-frequency resource between two adjacent first time-frequency resources in time domain.

4. The method according to claim 3, wherein the $i^{th}$ second time-frequency resource in the N second time-frequency resources is located after the $i^{th}$ first time-frequency resource in the N first time-frequency resources in time domain, and there is no first time-frequency resource between the $i^{th}$ first time-frequency resource and the $i^{th}$ second time-frequency resource, and a value of i is any integer from 1 to N.

5. The method according to claim 4, wherein each second time-frequency resource comprises X1 resource elements, the X1 resource elements correspond to X2 thresholds, X1 is an integer greater than or equal to X2, and X2 is an integer greater than or equal to 1.

6. The method according to claim 5, wherein an index index of a resource element corresponding to the $x^{th}$ threshold in the X2 thresholds satisfies:

$$\text{index} = (S_{\text{ID}} + D_{ID} + x + delta) \bmod X1,$$

wherein
delta is a preconfigured or predefined integer or an integer configured by a network, $S_{\text{ID}}$ is an identifier of the first terminal, and $D_{\text{ID}}$ is an identifier of the second terminal.

7. The method according to claim 1 or 2, wherein the N second time-frequency resources are located after the N first time-frequency resources in time domain.

8. The method according to any one of claims 1 to 7, wherein received strength of an S-SSB indicated by the feedback information is greater than a first threshold, and the first threshold is predefined, preconfigured, or configured received strength.

9. The method according to any one of claims 1 to 8, wherein the method further comprises:
sending or receiving direct communication requests DCRs on N third time domain resources, wherein the N third time domain resources are in one-to-one correspondence with the N first time-frequency resources, or the N third time domain resources are in one-to-one correspondence with the N second time-frequency resources.

10. The method according to any one of claims 1 to 9, wherein the method further comprises:
sending N pieces of sidelink control information SCI on the N first time-frequency resources, wherein the $i^{th}$ piece of SCI in the N pieces of SCI indicates at least one fourth time-frequency resource, and the at least one fourth time-frequency resource is used to send an S-SSB.

11. The method according to claim 10, wherein the $i^{th}$ piece of SCI indicates a priority of the S-SSB sent on the at least one fourth time-frequency resource.

12. A communication method, applied to a second terminal, wherein the method comprises:

receiving M S-SSBs on M first time-frequency resources, wherein the M first time-frequency resources are located within a resource pool, and M is an integer greater than 1; and
sending feedback information to a first terminal on one or more of M second time-frequency resources, wherein the feedback information indicates measurement results of one or more S-SSBs in the M S-SSBs, and the M second time-frequency resources are located in the resource pool.

13. The method according to claim 12, wherein feedback information corresponding to the $m^{th}$ S-SSB in the M S-SSBs is sent on the $m^{th}$ second time-frequency resource in the M second time-frequency resources, the $m^{th}$ S-SSB is an S-SSB received on the $m^{th}$ first time-frequency resource in the M first time-frequency resources, and a value of m is any integer from 1 to M.

14. The method according to claim 12 or 13, wherein the method further comprises:
measuring the M S-SSBs to obtain measurement results of the M S-SSBs.

15. The method according to any one of claims 12 to 14, wherein there is one second time-frequency resource between two adjacent first time-frequency resources in time domain.

16. The method according to claim 15, wherein the $m^{th}$ second time-frequency resource in the M second time-frequency resources is located after the $m^{th}$ first time-frequency resource in the M first time-frequency resources in time domain, and there is no first time-frequency resource between the $m^{th}$ first time-frequency resource and the $m^{th}$ second time-frequency resource.

17. The method according to claim 15 or 16, wherein each second time-frequency resource comprises X1 resource elements, the X1 resource elements correspond to X2 thresholds, X1 is an integer greater than or equal to X2, and X2 is an integer greater than or equal to 1.

18. The method according to claim 17, wherein an index index of a resource element corresponding to the $x^{th}$ threshold in the X2 thresholds satisfies:

$$\text{index} = (S_{\text{ID}} + D_{ID} + x + delta) mod\ X1,$$

wherein
$delta$ is a preconfigured or predefined integer, $S_{\text{ID}}$ is an identifier of the first terminal, and $D_{\text{ID}}$ is an identifier of the second terminal.

19. The method according to any one of claims 12 to 14, wherein the M second time-frequency resources are located after the M first time-frequency resources in time domain.

20. The method according to any one of claims 12 to 19, wherein received strength of an S-SSB indicated by the feedback information is greater than a first threshold, and the first threshold is predefined, preconfigured, or configured received strength.

21. The method according to any one of claims 12 to 20, wherein the method further comprises:
sending or receiving M DCRs on M third time domain resources, wherein the M third time domain resources are in one-to-one correspondence with the M first time-frequency resources, or the M third time domain resources are in one-to-one correspondence with the M second time-frequency resources.

22. The method according to any one of claims 12 to 21, wherein the method further comprises:
receiving M pieces of SCI on the M first time-frequency resources, wherein the $m^{th}$ piece of SCI in the M pieces of SCI indicates at least one fourth time-frequency resource, and the at least one fourth time-frequency resource is used to receive an S-SSB.

23. The method according to claim 22, wherein the $m^{th}$ piece of SCI indicates a priority of the S-SSB received on the at least one fourth time-frequency resource.

24. A communication apparatus, comprising a module configured to implement the method according to any one of claims 1 to 23.

25. A communication apparatus, comprising a processor, wherein the processor is configured to execute a computer program stored in a memory, to cause the communication apparatus to implement the method according to any one of claims 1 to 23.

26. The apparatus according to claim 25, wherein the communication apparatus further comprises the memory, and the memory is configured to store the computer program.

27. A computer-readable storage medium, wherein the computer-readable storage medium stores a computer program, and when the computer program is executed by a processor, the method according to any one of claims 1 to 23 is implemented.

28. A communication system, comprising a first terminal and a second terminal, wherein the first terminal is configured to implement the method according to any one of claims 1 to 11, and the second terminal is configured to perform the method according to any one of claims 12 to 23.

FIG. 1

(a)

(b)

(c)

(d)

FIG. 2

| Terminal 110 | Terminal 120 |
|---|---|
| RRC | RRC |
| PDCP | PDCP |
| RLC | RLC |
| MAC | MAC |
| PHY | PHY |

(a)

| Terminal 110 | Terminal 120 |
|---|---|
| APP | APP |
| SL-SDAP | SL-SDAP |
| SL-PDCP | SL-PDCP |
| SL-RLC | SL-RLC |
| SL-MAC | SL-MAC |
| SL-PHY | SL-PHY |

(b)

FIG. 3

400

| First terminal | Second terminal |
|---|---|
| S401: Determine a destination layer-2 ID used to receive PC5 unicast link establishment information | S402: A V2X application layer of the second terminal provides application information for PC5 unicast communication |

S403: DRC information

S404: Security establishment

S405: DAC information

S406: Transmit service data through an established unicast link

FIG. 4

$$N_{period}^{S-SSB}$$

S-SSB S-SSB

$$N_{offset}^{S-SSB}$$ $$N_{interval}^{S-SSB}$$

0 1 2 3 4 5 6 7 8 9 10 11 12 13 ...

160 ms

FIG. 5

☐ S-SSB time unit set 1   ▨ S-SSB time unit set 2   ▩ S-SSB time unit set 3

FIG. 6

| PSBCH | S-PSS | S-PSS | S-SSS | S-SSS | PSBCH | PSBCH | PSBCH | PSBCH | PSBCH | PSBCH | PSBCH | PSBCH | GAP |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

FIG. 7

FIG. 8

FIG. 9

FIG. 10

FIG. 11

| PRB | 0 | 1 | 2 | ... | 11 | 12 | 13 | Bitmap |
|---|---|---|---|---|---|---|---|---|
| 0 | | | | | | | | 1 |
| 1 | | | | | | | | 1 |
| 2 | | | | | | | | 1 |
| 3 | | | | | | | | 1 |
| 4 | | | | | | | | 0 |
| 5 | | | | | | | | 0 |
| 6 | | | | | | | | 0 |
| 7 | | | | | | | | 0 |
| 8 | | | | | | | | 0 |
| 9 | | | | | | | | 0 |
| 10 | | | | | | | | 0 |
| 11 | | | | | | | | 0 |
| 12 | | | | | | | | 0 |
| 13 | | | | | | | | 0 |
| 14 | | | | | | | | 0 |
| 15 | | | | | | | | 0 |
| 16 | | | | | | | | 0 |
| 17 | | | | | | | | 0 |
| 18 | | | | | | | | 0 |
| 19 | | | | | | | | 0 |
| 20 | | | | | | | | 0 |
| 21 | | | | | | | | 0 |
| 22 | | | | | | | | 0 |
| 23 | | | | | | | | 0 |
| 24 | | | | | | | | 0 |
| 25 | | | | | | | | 0 |
| 26 | | | | | | | | 0 |
| 27 | | | | | | | | 0 |
| 28 | | | | | | | | 0 |
| 29 | | | | | | | | 0 |

FIG. 12

Resource pool

| 0 | 1 | 2 | 3 | | 4 | 5 | 6 | 7 | |

K=2          ▨ PSFCH          ☐ PSSCH

FIG. 13

FIG. 14

FIG. 15

FIG. 16

FIG. 17

1800

```
┌──────────────┐                                    ┌──────────────┐
│              │                                    │    Second    │
│ First terminal│                                   │   terminal   │
└──────────────┘                                    └──────────────┘
       │                                                    │
       │  S1801: Send N S-SSBs on N first time-frequency resources →
       │                                                    │
       │                                                    │
       │  S1802: Send feedback information to the first terminal
       ← ─── on one or more of M second time-frequency resources
       │                                                    │
       │                                                    │
```

FIG. 18

Frequency domain

| First time-frequency resource | Second time-frequency resource | First time-frequency resource | Second time-frequency resource | First time-frequency resource | Second time-frequency resource | ... | First time-frequency resource | Second time-frequency resource |

$1^{st}$ $\quad$ $1^{st}$ $\quad$ $2^{nd}$ $\quad$ $2^{nd}$ $\quad$ $3^{rd}$ $\quad$ $3^{rd}$ $\quad$ $N^{th}$ $\quad$ $N^{th}$

Time domain

FIG. 19

EP 4 665 042 A1

PSFCH#1                                          PSFCH#2

| R#5 | R#6 | R#7 | R#8 |
|-----|-----|-----|-----|
| R#1 | R#2 | R#3 | R#4 |

19
18
17
16
15
14
13
12
11
10
9
8
7
6
5
4
3
2
1
0

| Group 1 | | | Group 2 | | |
|---|---|---|---|---|---|
| 1 | 3 | 5 | 7 | 9 | 11 |
| 0 | 2 | 4 | 6 | 8 | 10 |

Frequency domain

Resource element

Code domain

FIG. 20

EP 4 665 042 A1

Frequency
domain

| First time-frequency resource | First time-frequency resource | ⋯ | First time-frequency resource | First time-frequency resource | Second time-frequency resource | First time-frequency resource | ⋯ | Second time-frequency resource | Second time-frequency resource |

$1^{st}$　　　$2^{nd}$　　　$(N-1)^{th}$　　$N^{th}$　　　$1^{st}$　　　$2^{nd}$　　　$(N-1)^{th}$　　$N^{th}$　　Time
domain

FIG. 21

FIG. 22

Frequency
domain

Code
domain

| T | |
| | |
| | |
| | |
| | |
| n | n−1 |

...

| | | | |
| | | | |
| | | | |
| | | | |
| | | | n+1 |
| 3 | 2 | 1 | 0 |

AGC

AGC

AGC

AGC

FIG. 23

FIG. 24

FIG. 25

| AGC | PSCCH | PSCCH | PSCCH | PBSCH | S-PSS | S-PSS | S-SSS | S-SSS | PSBCH | PSBCH | PSBCH | PSBCH | GAP |
|-----|-------|-------|-------|-------|-------|-------|-------|-------|-------|-------|-------|-------|-----|
| 0   | 1     | 2     | 3     | 4     | 5     | 6     | 7     | 8     | 9     | 10    | 11    | 12    | 13  |

(a)

| AGC | PSCCH | PSCCH | PSCCH | S-PSS | S-PSS | S-SSS | S-SSS | PBSCH | PSBCH | PSBCH | PSBCH | PSBCH | GAP |
|-----|-------|-------|-------|-------|-------|-------|-------|-------|-------|-------|-------|-------|-----|
| 0   | 1     | 2     | 3     | 4     | 5     | 6     | 7     | 8     | 9     | 10    | 11    | 12    | 13  |

(b)

FIG. 26

| GAP |
|---|
| PBSCH |
| PBSCH |
| PBSCH |
| PBSCH |
| S-SSS |
| S-SSS |
| S-PSS |
| S-PSS |
| PBSCH |
| PSCCH |
| PSCCH |
| PSCCH |
| AGC |

11 PRBs

12 PRBs

Subchannel
(15 PRBs)

(a)

| GAP |
|---|
| PBSCH |
| PBSCH |
| PBSCH |
| PBSCH |
| S-SSS |
| S-SSS |
| S-PSS |
| S-PSS |
| PBSCH |
| PSCCH |
| PSCCH |
| PSCCH |
| AGC |

10 PRBs

11 PRBs

Subchannel     Subchannel
(10 PRBs)      (10 PRBs)

(b)

FIG. 27

|  | 11 PRBs |  |
|---|---|---|
|  | GAP |  |
| | PBSCH | |
| | PBSCH | |
| | PBSCH | |
| | PBSCH | |
| Bit | S-SSS | Bit |
| | S-SSS | |
| | S-PSS | |
| | S-PSS | |
| | PBSCH | |
|  | PSCCH |  |
|  | PSCCH |  |
|  | PSCCH |  |
|  | AGC |  |

Subchannel
(15 PRBs)

(a)

|  | 11 PRBs |
|---|---|
|  | GAP |
| | PBSCH |
| | PBSCH |
| | PBSCH |
| Bit | PBSCH |
| | S-SSS |
| | S-SSS |
| | S-PSS |
| | S-PSS |
| | PBSCH |
| | PSCCH |
| Bit | PSCCH |
| | PSCCH |
| | AGC |

10 PRBs

Subchannel
(15 PRBs)

(b)

FIG. 28

51

Apparatus 2900

Sending module 2910

Receiving module 2920

FIG. 29

Apparatus 3000

Processor
3010

Memory
3020

Transceiver
3030

FIG. 30

## INTERNATIONAL SEARCH REPORT

| International application No. |
| --- |
| **PCT/CN2024/074574** |

**A.    CLASSIFICATION OF SUBJECT MATTER**

H04W 72/0446(2023.01)i

According to International Patent Classification (IPC) or to both national classification and IPC

**B.    FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT: WPABSC; ENTXTC; WPABS; ENTXT; VEN; CNKI; 3GPP: 时频资源, 资源池, 资源池内, 资源池中, 侧行同步信号块, 终端, 反馈信息, 测量结果, 时域, 阈值, 资源单元, 侧行控制信息, time frequency resource, resource pool, in the resource pool, S-SSB, terminal, feedback information, measurement result, time domain, resource unit, SCI

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112564865 A (KT CORP.) 26 March 2021 (2021-03-26) <br> entire document | 1-28 |
| A | CN 115580383 A (HUAWEI TECHNOLOGIES CO., LTD.) 06 January 2023 (2023-01-06) <br> entire document | 1-28 |
| A | CN 112600652 A (MEDIATEK SINGAPORE PTE. LTD.) 02 April 2021 (2021-04-02) <br> entire document | 1-28 |
| A | CN 112997551 A (GUANGDONG OPPO MOBILE TELECOMMUNICATIONS CORP., LTD.) 18 June 2021 (2021-06-18) <br> entire document | 1-28 |
| A | WO 2021237654 A1 (QUALCOMM INC. et al.) 02 December 2021 (2021-12-02) <br> entire document | 1-28 |

☐ Further documents are listed in the continuation of Box C.    ☑ See patent family annex.

| | | |
| --- | --- | --- |
| *      Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "D"   document cited by the applicant in the international application | "X" | document of particular relevance; the claimed invention cannot be considered novel or cannot be considered to involve an inventive step when the document is taken alone |
| "E"   earlier application or patent but published on or after the international filing date | | |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&" | document member of the same patent family |
| "P"   document published prior to the international filing date but later than the priority date claimed | | |

| Date of the actual completion of the international search | Date of mailing of the international search report |
| --- | --- |
| **12 April 2024** | **16 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074574**

| Patent document cited in search report | | | Publication date (day/month/year) | Patent family member(s) | | | Publication date (day/month/year) |
|---|---|---|---|---|---|---|---|
| CN | 112564865 | A | 26 March 2021 | US | 2021099994 | A1 | 01 April 2021 |
| | | | | US | 11589349 | B2 | 21 February 2023 |
| CN | 115580383 | A | 06 January 2023 | | None | | |
| CN | 112600652 | A | 02 April 2021 | | None | | |
| CN | 112997551 | A | 18 June 2021 | | None | | |
| WO | 2021237654 | A1 | 02 December 2021 | BR | 112022023285 | A2 | 20 December 2022 |
| | | | | US | 2023319745 | A1 | 05 October 2023 |
| | | | | KR | 20230017770 | A | 06 February 2023 |
| | | | | TW | 202203687 | A | 16 January 2022 |
| | | | | EP | 4158969 | A1 | 05 April 2023 |
| | | | | EP | 4158969 | A4 | 28 February 2024 |

Form PCT/ISA/210 (patent family annex) (July 2022)

**REFERENCES CITED IN THE DESCRIPTION**

**Patent documents cited in the description**

- CN 202310189219X